# EUROPEAN PATENT APPLICATION

(11) **EP 4 826 592 A1**
(43) Date of publication of application: **21.10.2026**
(21) Application number: 24903181.6
(22) Date of filing: 13.06.2024
(51) Int. Cl.: G06F 40/56, G06F 18/10, G06F 18/30, G06N 3/0475, G06N 20/00, G06N 99/00

(54) **PROMPT ADJUSTMENT PROGRAM, PROMPT ADJUSTMENT METHOD, AND INFORMATION PROCESSING DEVICE**

(30) Priority: 14.12.2023 WO PCT/JP2023/044877
(71) Applicant: FUJITSU LIMITED, Kawasaki-shi, Kanagawa 211-8588 (JP)
(72) Inventor: OKURA, Seiji, Kawasaki-shi, Kanagawa 211-8588 (JP); KAKIBUCHI, Taisei, Kawasaki-shi, Kanagawa 211-8588 (JP)
(74) Representative: Hoffmann Eitle
(86) International application number: PCT/JP2024/021509
(87) International publication number: WO 2025/126517

(57) **Abstract**

A prompt adjustment program causes a computer to execute a process including: generating, based on configuration information in which a configuration of a prompt is represented by a combination of a plurality of items corresponding to a plurality of blocks included in the prompt and possible values for the respective items, a plurality of sample prompts corresponding to a plurality of types of the combinations; and determining, as an adjustment item for adjusting the prompt, an item included in the combination used to generate a sample prompt that yields a result with a highest inference accuracy among results obtained by inputting the plurality of sample prompts into a language model.

## Description

### [Technical Field]

The present embodiment relates to a prompt adjustment program, a prompt adjustment method, and an information processing device.

### [Background Art]

In recent years, language generation artificial intelligence (AI) has attracted attention, and the language generation AI is used to perform, for example, question and answer (QA) and information recommendation tasks. In order to improve accuracy of individual tasks in the language generation AI, fine-tuning of a pre-trained model has been conventionally performed, but the cost (calculation time and calculation resources) of fine-tuning is enormous.

Furthermore, changing a sentence (prompt) to be input to the pre-trained model may improve the output of accuracy of the pre-trained model. Therefore, for example, a technology (prompting technology) for generating a sentence to be input as a prompt to a large language model (LLM) has attracted attention (for example, Patent Document 1). In addition, a method of optimizing a short prompt of about a few words according to a related art has also been known (for example, Non Patent Document 1).

### [Prior Art Reference]

### [Patent Document]

[Patent Document 1]
   Japanese Patent No. 7325152
[Patent Document 2]
   US Patent Application Publication No. 2023/0316001
[Patent Document 3]
   Japanese Laid-open Patent Publication No. 2023-73220
[Patent Document 4]
   US Patent Application Publication No. 2023/0316006

### [Non Patent Document]

[Non Patent Document 1]
Mingkai Deng, Jianyu Wang, Cheng-Ping Hsieh, Yihan Wang, Han Guo, Tianmin Shu, Meng Song, Eric P. Xing, Zhiting Hu, "RLPrompt: Optimizing Discrete Text Prompts with Reinforcement Learning", [online], May 25, 2022, CVPR2021, [searched on November 29, 2023], Internet
<URL:/arxiv.org/abs/2205.12548>

### [Summary of Invention]

### [Problems to be Solved]

However, in such a prompt generation method according to the related art, a computational cost is determined by raising the prompt length to the power of the vocabulary size. Therefore, when attempting to cope with the generation of a prompt having a large (long) vocabulary size, the computational cost becomes enormous.

In one aspect, an object of the present embodiment is to enable prompt optimization with a low computational cost.

### [Means to Solve Problems]

According to an aspect of the embodiments, a prompt adjustment program causes a computer to execute a process including: generating, based on configuration information in which a configuration of a prompt is represented by a combination of a plurality of items corresponding to a plurality of blocks included in the prompt and possible values for the respective items, a plurality of sample prompts corresponding to a plurality of types of the combination; and determining, as an adjustment item for adjusting the prompt, an item included in the combination used to generate a sample prompt that yields a result with a highest inference accuracy among results obtained by inputting the plurality of sample prompts into a language model.

### [Effect of Invention]

According to an embodiment, prompt optimization can be implemented with a low computational cost.

### [Brief Description of Drawings]

Fig. 1 is a block diagram illustrating a hardware (HW) configuration example of a computer that implements functions of a prompt adjustment device as an example of a first embodiment;
Fig. 2 is a diagram illustrating a functional configuration of the prompt adjustment device as an example of the first embodiment;
Fig. 3 is a diagram illustrating a configuration of a prompt;
Fig. 4 is a diagram illustrating an example of formulation information in the prompt adjustment device as an example of the first embodiment;
Fig. 5 is a diagram illustrating an example of the formulation information and an example of all combinations of possible values of attributes in the prompt adjustment device as an example of the first embodiment;
Fig. 6 is a diagram illustrating management information created by an optimization unit of the prompt adjustment device according to the first embodiment;
Fig. 7 is a diagram illustrating prompt design information generated by the optimization unit of the prompt adjustment device as an example of the first embodiment;
Fig. 8 is a flowchart for describing processing in the optimization unit of the prompt adjustment device according to the first embodiment;
Fig. 9 is a flowchart illustrating details of processing in step S4 of the flowchart illustrated in Fig. 8;
Fig. 10 is a diagram illustrating a functional configuration of a prompt adjustment device as an example of a second embodiment;
Fig. 11 is a diagram illustrating data mining input information in the prompt adjustment device according to the second embodiment;
Fig. 12 is a diagram illustrating an interaction generated by an interaction extraction unit of the prompt adjustment device according to the second embodiment;
Fig. 13 is a diagram illustrating an interaction generated by the interaction extraction unit of the prompt adjustment device according to the second embodiment;
Fig. 14 is a diagram illustrating a limited search range;
Fig. 15 is a flowchart for describing processing in an optimization unit of the prompt adjustment device according to the second embodiment;
Fig. 16 is a flowchart for describing processing in a pre-processing unit of the prompt adjustment device according to the second embodiment;
Fig. 17 is a flowchart for describing processing in a post-processing unit of the prompt adjustment device according to the second embodiment;
Fig. 18 is a flowchart for describing processing in an optimization processing unit of the prompt adjustment device according to the second embodiment;
Fig. 19 is a flowchart illustrating a modification of the flowchart illustrated in Fig. 17;
Fig. 20 is a flowchart illustrating a modification of the flowchart illustrated in Fig. 17;
Fig. 21 is a diagram illustrating a modification of formulation information;
Fig. 22 is a diagram illustrating a functional configuration of a prompt adjustment device as an example of a third embodiment;
Fig. 23 is a diagram for describing a method of creating training data by a history data mining processing unit of the prompt adjustment device as an example of the third embodiment;
Fig. 24 is a diagram illustrating the training data in the prompt adjustment device as an example of the third embodiment;
Fig. 25 is a diagram illustrating output information in the prompt adjustment device as an example of the third embodiment;
Fig. 26 is a flowchart for describing processing in a training phase of the history data mining processing unit in the prompt adjustment device according to the third embodiment; and
Fig. 27 is a flowchart for describing processing in a prediction phase of the prompt adjustment device according to the third embodiment.

### [Description of Embodiments]

Hereinafter, embodiments of a prompt adjustment program, a prompt adjustment method, and an information processing device will be described with reference to the drawings. However, the embodiments described below are merely examples, and it is not intended to exclude the application of various modifications and technologies that are not explicitly described in the embodiments. In other words, each embodiment can be variously modified (by combining embodiments and each modification or the like) and implemented without departing from the gist thereof. Each drawing is not intended to include only the components illustrated in the drawing, but may include other functions and the like.

### (I) Description of First Embodiment

### (A) Configuration

### (A-1) Hardware Configuration

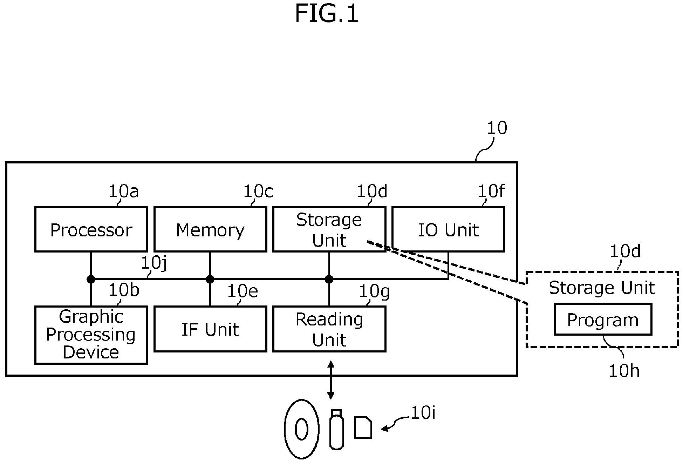

Fig. 1 is a block diagram illustrating a hardware (HW) configuration example of a computer 10 that implements functions of a prompt adjustment device 1a as an example of a first embodiment. In a case where a plurality of computers are used as HW resources for implementing the functions of the prompt adjustment device 1a, each computer may have a HW configuration illustrated in Fig. 1.

The prompt adjustment device 1a is an information processing device that performs adjustment of a prompt to be input to a language model such that an output from the language model is highly accurate. The language model may be a large language model (LLM).

As illustrated in Fig. 1, the computer 10 may include, for example, a processor 10a, a graphic processing device 10b, a memory 10c, a storage unit 10d, an interface (IF) unit 10e, an input/output (IO) unit 10f, and a reading unit 10g as the HW configuration.

The processor 10a is an arithmetic processing device that performs various controls and computations and is an example of a controller. The processor 10a may be communicably connected to each block in the computer 10 via a bus 10j. Note that the processor 10a may be a multiprocessor including a plurality of processors, may be a multi-core processor including a plurality of processor cores, or may have a configuration including a plurality of multi-core processors.

The processor 10a may be, for example, an integrated circuit (IC) such as a CPU, an MPU, an APU, a DSP, an ASIC, or an FPGA. Note that a combination of two or more of such integrated circuits may be used as the processor 10a. CPU is an abbreviation for Central Processing Unit, and MPU is an abbreviation for Micro Processing Unit. APU is an abbreviation for Accelerated Processing Unit. DSP is an abbreviation for Digital Signal Processor, ASIC is an abbreviation for Application Specific IC, and FPGA is an abbreviation for Field-Programmable Gate Array.

The graphic processing device 10b performs screen display control on an output device such as a monitor in the IO unit 10f. The graphic processing device 10b may have a configuration as an accelerator that executes machine learning processing and inference processing using a machine learning model. The graphic processing device 10b may be any of various arithmetic processing devices, for example, an integrated circuit (IC) such as a graphics processing unit (GPU), an APU, a DSP, an ASIC, or an FPGA.

The memory 10c is an example of HW that stores various types of information such as data and programs. The memory 10c may be, for example, one or both of a volatile memory such as a dynamic random access memory (DRAM) and a nonvolatile memory such as a persistent memory (PM).

The storage unit 10d is an example of HW that stores various types of information such as data and programs. The storage unit 10d may be any of various storage devices, for example, a magnetic disk device such as a hard disk drive (HDD), a semiconductor drive device such as a solid state drive (SSD), and a nonvolatile memory. The nonvolatile memory may be, for example, a flash memory, a storage class memory (SCM), or a read only memory (ROM).

The storage unit 10d may store a program 10h (prompt adjustment program) for implementing all or some of various functions of the computer 10.

For example, the processor 10a of the prompt adjustment device 1a can implement a prompt adjustment function to be described later by loading the program 10h stored in the storage unit 10d onto the memory 10c and executing the program 10h.

The IF unit 10e is an example of a communication IF that controls connection and communication between the computer 10 and other computers. For example, the IF unit 10e may include an adapter conforming to local area network (LAN) such as Ethernet^{®}, optical communication such as fibre channel (FC), or the like. The adapter may support one or both of wireless and wired communication systems.

For example, the prompt adjustment device 1a may be communicably connected to another information processing device (not illustrated), a database, or the like via the IF unit 10e and a network. Note that the program 10h may be downloaded from the network to the computer 10 via the communication IF and stored in the storage unit 10d.

The IO unit 10f may include one or both of an input device and an output device. Examples of the input device may include a keyboard, a mouse, and a touch panel. Examples of the output device may include a monitor, a projector, and a printer. In addition, the IO unit 10f may include a touch panel or the like in which an input device and a display device are integrated. The output device may be connected to the graphic processing device 10b.

The reading unit 10g is an example of a reader that reads information, such as data and programs, recorded on a recording medium 10i. The reading unit 10g may include a connection terminal or device to which the recording medium 10i can be connected or inserted. Examples of the reading unit 10g may include an adapter conforming to a universal serial bus (USB) or the like, a drive device that accesses a recording disk, and a card reader that accesses a flash memory such as an SD card. Note that the program 10h may be stored in the recording medium 10i, and the reading unit 10g may read the program 10h from the recording medium 10i and store the program 10h in the storage unit 10d.

Examples of the recording medium 10i may include a non-transitory computer-readable recording medium such as a magnetic/optical disk or a flash memory. Examples of the magnetic/optical disk may include a flexible disk, a compact disc (CD), a digital versatile disc (DVD), a Blu-ray disc, and a holographic versatile disc (HVD). Examples of the flash memory may include semiconductor memories such as a USB memory and an SD card.

The above-described HW configuration of the computer 10 is an example. Therefore, the HW in the computer 10 may be increased or decreased (for example, by adding or deleting an optional block), divided, or integrated in any combination, or buses may be added or deleted as appropriate.

### (A-2) Functional Configuration Example

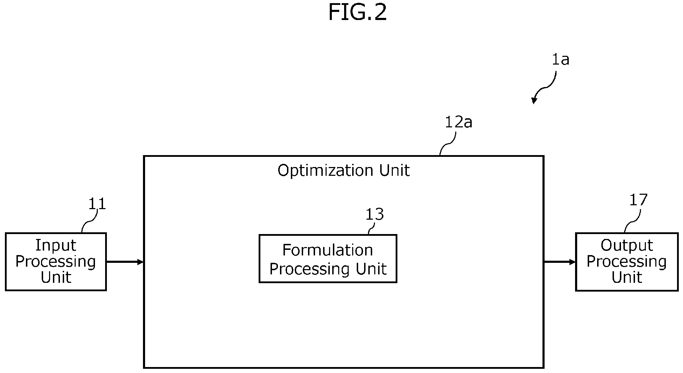

Fig. 2 is a diagram illustrating a functional configuration of the prompt adjustment device 1a as an example of the first embodiment.

As illustrated in Fig. 2, the prompt adjustment device 1a may illustratively include functions as an input processing unit 11, an optimization unit 12a, and an output processing unit 17. The functions of the input processing unit 11, the optimization unit 12a, and the output processing unit 17 may be implemented, for example, by the above-described processor 10a executing the program 10h (prompt adjustment program).

In the input processing unit 11, for example, a user or the like inputs a plurality of (a plurality of types of) attributes included in a prompt and possible values for each attribute via a keyboard, a mouse, a network, or the like (not illustrated).

In addition, input data is also input to the input processing unit 11. The input data includes a problem (question sentence) and a ground truth thereof. The input data including the problem and the ground truth may be referred to as sample data with a ground truth. The user or the like may also input the input data via a keyboard, a mouse, a network, or the like.

The input data is appropriately changed and implemented according to a task. Here, for example, a movie recommendation task whose contents include inputting a movie history list watched by the user and a plurality of movie candidate lists to be recommended next, and selecting and outputting a movie that the user may watch next from the movie candidate list will be exemplified.

The "problem" included in the input data corresponds to the "movie history list watched by the user" and the "plurality of movie candidate lists to be recommended next" input as described above. Furthermore, the "ground truth" corresponds to a "movie as a ground truth". Hereinafter, specific examples of the problem and the ground truth thereof will be described.
Examples of the problem: a history list "AAA, BBB, and CCC" (AAA and the like are names of movies), a recommendation candidate list "DDD, EEE, FFF, GGG, and HHH" (DDD and the like are names of movies)
Examples of the ground truth: GGG (GGG is a name of a movie)

The input processing unit 11 delivers each piece of input information to the optimization unit 12a. For example, the input processing unit 11 may store each piece of input information in a predetermined storage area of the memory 10c or the storage unit 10d. The optimization unit 12a may acquire the information by reading the information stored in such storage areas.

The optimization unit 12a generates information for adjusting (creating) a prompt based on the input data. The information for adjusting or creating a prompt may be referred to as prompt design information. By inputting a prompt created based on the prompt design information to the LLM, a highly accurate answer can be obtained with improved task performance (for example, question and answer or information recommendation) using the LLM. That is, the optimization unit 12a generates the prompt design information for creating an optimized prompt.

As illustrated in Fig. 2, the optimization unit 12a functions as a formulation processing unit 13.

The formulation processing unit 13 formulates a configuration of the prompt. The formulation processing unit 13 formulates the prompt by combining a plurality of attributes included in the prompt and possible values for the respective attributes. The formulation may be referred to as parameterization or formatting.

The formulation processing unit 13 divides the prompt into a plurality of blocks. Each block is assigned with a function in the prompt. The block is an element that defines the prompt. The block may be referred to as the attribute.

For example, the formulation processing unit 13 may treat each of a plurality of sentences included in the prompt as the block, or may determine the block based on a specific word included in the sentence, which may be implemented with appropriate changes.

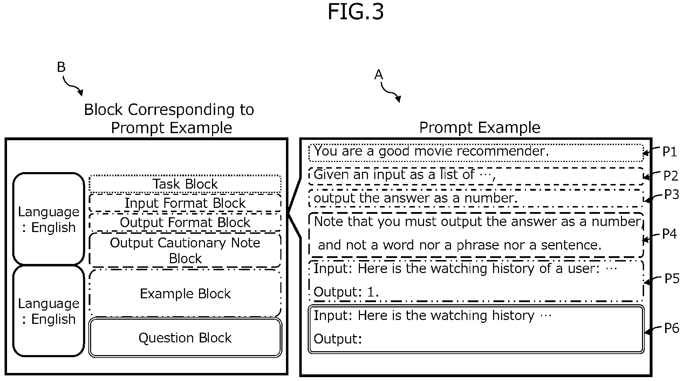

Fig. 3 is a diagram illustrating the configuration of the prompt.

In Fig. 3, reference sign A indicates an example of the prompt, and reference sign B indicates a block configuration corresponding to the prompt indicated by reference sign A.

Fig. 3 illustrates a prompt for an information recommendation task for causing the LLM to recommend a movie.

The prompt is configured by combining the plurality of blocks. The prompt illustrated in Fig. 3 includes a task block, an input format block, an output format block, an output cautionary note block, an example block, and a question block. The task block, the input format block, the output format block, the output cautionary note block, the example block, and the question block are examples of items divided as the blocks.

The task block, the input format block, the output format block, the output cautionary note block, the example block, and the question block respectively correspond to signs P1, P2, P3, P4, P5, and P6 of the prompt indicated by reference sign A in Fig. 3. Note that contents of Input in P5 and P6 correspond to the above-described "problem" of the input data. In particular, the content of Input in P6 is a question for the LLM, and the LLM generates an answer to the question.

As described above, the function in the prompt is assigned to each block. For example, the task block indicates the type of task, and the question block poses an actual question to the LLM.

In the prompt indicated by reference sign A in Fig. 3, the task block is at the first position and the question block is at the last position, but there is a high possibility that accuracy of an answer of the LLM changes depending on whether the task block is at the second position, the third position, or the last position, and whether the question block is at the first position, the second position, or the third position. In particular, in the prompt, the attribute related to an order indicating "a position where each block is positioned" is considered to be important in terms of performance.

Hereinafter, a low/high accuracy of a result obtained by inputting the prompt to the LLM may be simply referred to as low/high accuracy.

The formulation processing unit 13 formulates the prompt by setting the element that defines the prompt as the attribute and setting the possible values for the plurality of attributes. As a result, it is possible to handle the prompt as a problem for which an optimal combination is automatically determined. Hereinafter, information created by the formulation processing unit 13 formulating the prompt and associating each attribute with possible values of each attribute may be referred to as formulation information.

The formulation information represents a setting of the attribute resulting from the formulation of the prompt. The formulation processing unit 13 may create the formulation information based on an input sample prompt. The sample prompt may be a prompt generated with a combination of parameters and output by being applied to each piece of sample data (for example, a history list and a recommendation candidate list including a specific movie name).

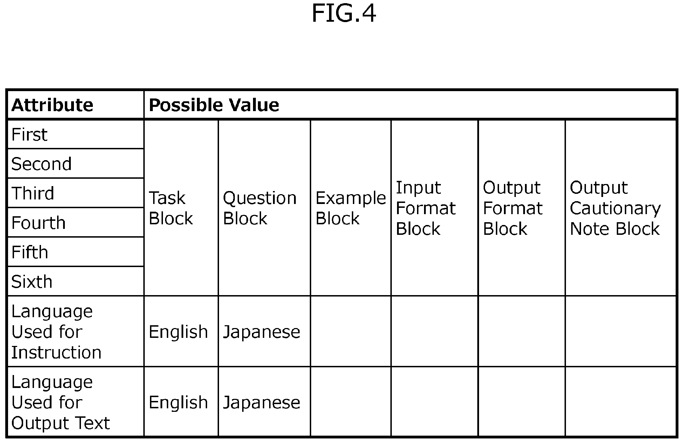

Fig. 4 is a diagram illustrating an example of the formulation information in the prompt adjustment device 1a as an example of the first embodiment.

In the formulation information illustrated in Fig. 4, for example, an order (first to sixth positions) from the first position in the prompt is set as the attribute, and the task block, the input format block, the output format block, the output cautionary note block, the example block, and the question block are illustrated as the possible values. The order from the first block in the prompt is an example of a position of the block in the prompt. Therefore, the attribute that is the order from the first block in the prompt is an example of the item representing the position of the block in the prompt.

Therefore, any one of the task block, the input format block, the output format block, the output cautionary note block, the example block, and the question block is set as each of the attributes including the first to sixth positions.

Furthermore, in the example illustrated in Fig. 4, in addition to the first to sixth positions (an order from the first position) described above, a language used for an instruction and a language used for an output text are also set as the attributes. For the language used for an instruction and the language used for an output text, possible values are English and Japanese. The "language used for an instruction" corresponds to languages of the task block, the input/output format block, and the output cautionary note block, and the "language used for an output text" corresponds to languages of the example block and the question block.

In addition, English and Japanese described above, which are the possible values for the language used for an instruction and the language used for an output text, are examples of expression variations of the block.

The optimization unit 12a may perform setting (prompt design) as described below, for example, by selecting and setting a value selected from among the possible values for each attribute.

First: Task block
Second: Input format block
Third: Output format block
Fourth: Output cautionary note block
Fifth: Example block
Sixth: Question block
Language used for instruction: English
Language used for output text: English

The optimization unit 12a creates a plurality of (a plurality of types of) pieces of prompt design information by switching a value to be selected from among the possible values for each attribute. The value selected from among the possible values set for each attribute may be referred to as a parameter, an input parameter, or a hyperparameter.

The optimization unit 12a generates combinations of all the parameters for all the attributes by switching each possible value (parameter) for each attribute.

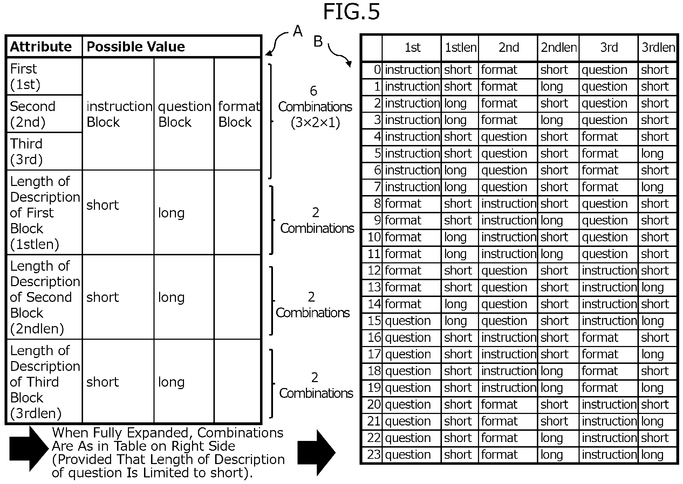

Fig. 5 is a diagram illustrating an example of the formulation information and an example of all the combinations of the possible values of the attributes in the prompt adjustment device 1a as an example of the first embodiment.

In Fig. 5, reference sign A indicates another example of the formulation information, and reference sign B indicates all the combinations of the possible values for the attributes corresponding to the formulation information indicated by reference sign A. However, in this example, the question block is formulated as having only short.

In the formulation information exemplified by reference sign A in Fig. 5, an order (first to third positions) from the first position in the prompt is set as the attribute, and an instruction block, the question block, and a format block are illustrated as the possible values.

Furthermore, in the example illustrated in Fig. 5, in addition to the first to third positions (the order from the first position) described above, a length (1stlen) of a description of the first block, a length (2ndlen) of a description of the second block, and a length (3rdlen) of a description of the third block are also set as the attributes. For the length (1stlen) of the description of the first block, the length (2ndlen) of the description of the second block, and the length (3rdlen) of the description of the third block, the possible values are short and long. However, in a case where the first block (1st) {alternatively, the second block (2nd) or the third block (3rd)} is question, the possible value for 1stlen (alternatively, 2ndlen or 3rdlen) is only short.

In addition, short and long, which are the possible values for the length (1stlen) of the description of the first block, the length (2ndlen) of the description of the second block, and the length (3rdlen) of the description of the third block, described above, are examples of the expression variations of the block. For example, the accuracy of the prompt may greatly change depending on variations such as whether the output prompt such as the task block is short (brief and concise) or long (lengthy and detailed).

In an example of setting of the attribute indicated by reference sign A in Fig. 5, all combinations of possible values of the respective attributes amount to 48 (= 6 × 2 × 2 × 2). Since the question only has the value "short," the number of combinations becomes 24 (= 48 ÷ 2), as indicated by reference sign B. The number of all combinations of the possible values of the respective attributes is represented as K. In the example indicated by reference sign B in Fig. 3, K = 24.

The formulation processing unit 13 stores the generated formulation information and all the combinations of the possible values for the respective attributes in a predetermined storage area or the like of the memory 10c.

The formulation processing unit 13 creates the formulation information (configuration information) representing the configuration of the prompt by a combination of a plurality of (attributes: order or language; see Fig. 4) or a plurality of (attributes: order or length; see Fig. 5) corresponding to the plurality of blocks included in the prompt and possible values for the respective items.

The optimization unit 12a generates a plurality of (K) prompts (sample prompts) by executing processing such as sorting on the sample data with a ground truth according to each of all the combinations (K) of the possible values for the respective attributes generated by the formulation processing unit 13. The optimization unit 12a generates K × N sample prompts by generating a plurality of (K) prompts (sample prompts) using a plurality of (N) pieces of sample data with ground truths.

An optimization processing unit 18 generates a plurality of sample prompts corresponding to a plurality of types of combinations based on the formulation information and the plurality of pieces of sample data with ground truths.

The optimization unit 12a inputs each of the generated K × N sample prompts to the LLM, compares an output of the LLM with the ground truth, and calculates accuracy for each combination. Here, as the accuracy for each combination, for example, an average value of the accuracy of N pieces of sample data with ground truths may be calculated. Note that a method of calculating the accuracy is not limited thereto, and can be implemented with appropriate changes.

The optimization unit 12a may create management information for managing the accuracy for each combination. The management information includes combinations of the plurality of pieces of sample data with ground truths and a combination of the possible values for the plurality of attributes in the formulation information.

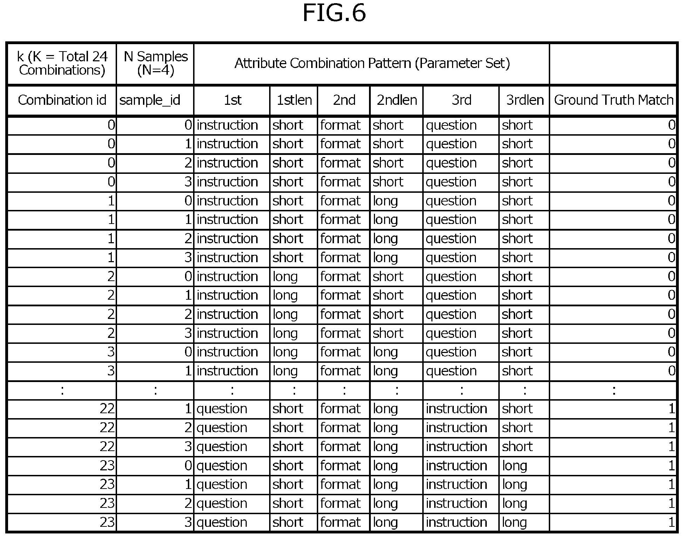

Fig. 6 is a diagram illustrating the management information created by the optimization unit 12a of the prompt adjustment device 1a according to the first embodiment.

Fig. 6 illustrates the management information in a case where four (N = 4) pieces of sample data with ground truths are used based on the formulation information illustrated in Fig. 5.

In the management information illustrated in Fig. 6, combination id, sample_id, attribute combination pattern, and ground truth match are associated with each other.

The attribute combination pattern may be referred to as a parameter set. The combination id is identification information for specifying the attribute combination pattern. The sample_id is identification information for specifying the sample data with a ground truth. The ground truth match may indicate whether or not a result obtained by inputting a prompt generated based on corresponding sample data with a ground truth and the attribute combination pattern to the LLM is the ground truth, or may be calculated by a commonly used accuracy index. Here, an example in which the ground truth match simply indicates whether or not the result is the ground truth will be described.

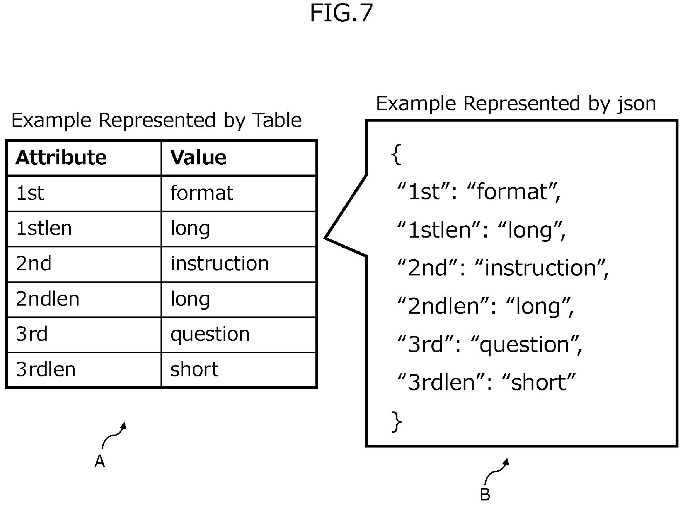

Fig. 7 is a diagram illustrating the prompt design information generated by the optimization unit 12a of the prompt adjustment device 1a as an example of the first embodiment.

In the example illustrated in Fig. 7, reference sign A indicates an example in which the prompt design information is represented in a table format, and reference sign B indicates an example in which the prompt design information is represented in a JavaScript Object Notation (JSON) format.

The optimization unit 12a delivers the generated prompt design information to the output processing unit 17. For example, the optimization unit 12a may store the prompt design information in a predetermined storage area of the memory 10c or the storage unit 10d. The output processing unit 17 may acquire the information by reading the information stored in such storage areas.

The optimization unit 12a extracts (generates) a combination having the highest accuracy as the prompt design information. An attribute included in the combination included in the prompt design information and a possible value are used as an adjustment item for adjusting the prompt.

That is, the optimization unit 12a determines, as the adjustment item for adjusting the prompt, an item included in a combination used to generate a sample prompt that yields a result with the highest inference accuracy among results obtained by inputting the plurality of sample prompts to the LLM (language model).

The output processing unit 17 executes processing for outputting the prompt design information generated by the optimization unit 12a. For example, the output processing unit 17 may output the prompt design information to another system.

### (B) Operation

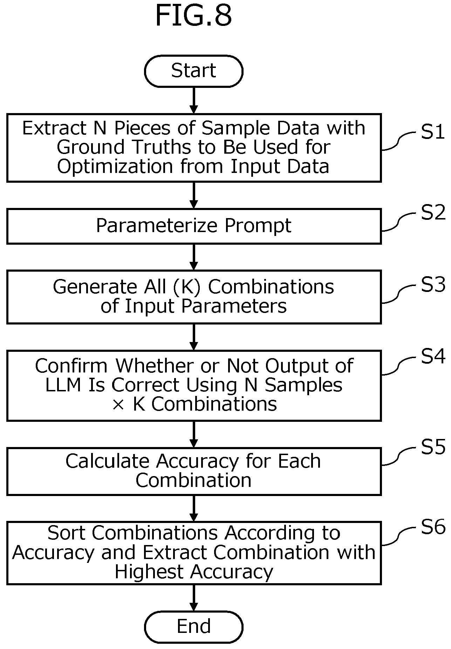

The processing in the optimization unit 12a of the prompt adjustment device 1a according to the first embodiment configured as described above will be described with reference to the flowchart (steps S1 to S6) illustrated in Fig. 8.

In step S1, the optimization unit 12a extracts a plurality of (N) pieces of sample data with ground truths to be used for optimization of the prompt from the input data stored by the input processing unit 11.

In step S2, the formulation processing unit 13 parameterizes (formulates) the configuration of one or more sample prompts to create the formulation information.

In step S3, the optimization unit 12a generates all (K) combinations of the parameters for all the attributes by switching each possible value (parameter) for each attribute in the formulation information. In addition, the optimization unit 12a generates a plurality of (K) sample prompts by using the plurality of (N) pieces of sample data with ground truths, thereby generating K × N sample prompts.

In step S4, the optimization unit 12a inputs each of the generated K × N sample prompts to the LLM, and calculates accuracy of each output of the LLM. Here, whether or not each LLM output is correct is calculated for each sample prompt (0: incorrect, 1: correct).

In step S5, the optimization unit 12a calculates the accuracy by calculating an average of the accuracy of N sample prompts or the like for each combination, and in step S6, the optimization unit 12a extracts (generates) the combination with the highest accuracy as the prompt design information. Thereafter, the processing ends.

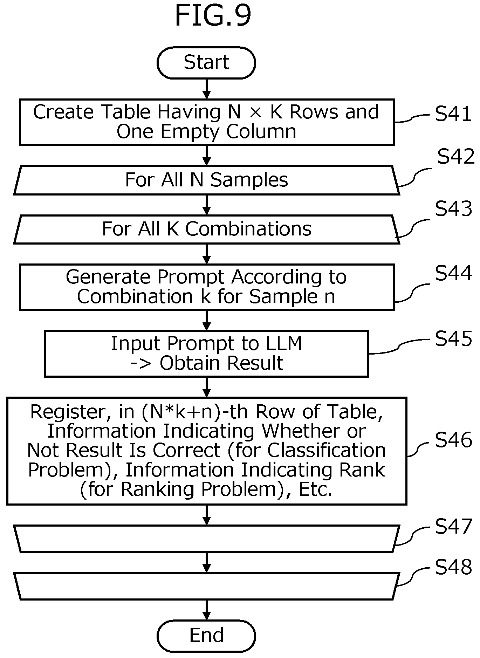

Next, details of the processing in step S4 of the flowchart illustrated in Fig. 8 will be described according to the flowchart (steps S41 to S48) illustrated in Fig. 9.

In step S41, the optimization unit 12a creates a table having N × K rows for a column having the combination id, the sample_id, the attribute combination pattern, and the ground truth match as the items. Note that the column of "ground truth match" is empty. In the table, the rows are created in ascending order of the combination id, and in ascending order of the sample_id for the same combination id. The attribute combination pattern is a value of each attribute corresponding to the combination id.

In step S42, loop processing of repeatedly performing control up to step S47 on all nodes present in N samples is started. The optimization unit 12a extracts one sample from N samples. The extracted sample is referred to as a sample n.

In step S43, loop processing of repeatedly performing control up to step S46 for all the K combinations is started. The optimization unit 12a extracts one combination from K combinations. The extracted combination is referred to as a combination k.

In step S44, the optimization unit 12a generates a prompt according to the combination k based on the sample n.

In step S45, the optimization unit 12a inputs the created prompt to the LLM and obtains a result (output) thereof.

In step S46, the optimization unit 12a registers the result of the LLM in the (N×k+n)-th row of the management information created in step S41. For example, in a case where the prompt is a classification problem, the optimization unit 12a registers information indicating whether or not the result is the ground truth, and in a case where the prompt is a ranking problem, the optimization unit 12a registers information indicating a rank, a calculation result such as a general accuracy index according to a rank of the ground truth, and the like.

In the management information illustrated in Fig. 6, in a case where the first row is the 0-th row, when the combination id = k and the sample_id = n, the result is in the (N×k+n)-th row.

In step S47, loop end processing corresponding to step S43 is executed. Here, when the processing for all the combinations is completed, the processing proceeds to step S48.

In step S48, loop end processing corresponding to step S42 is executed. Here, when the processing for all the samples is completed, the processing ends.

### (C) Effects

As described above, in the prompt adjustment device 1a of the first embodiment, the formulation processing unit 13 (optimization unit 12a) formulates the prompt by dividing the prompt into the plurality of blocks, and creates the formulation information in which the plurality of attributes and the possible values for the respective attributes are associated with each other.

Furthermore, the optimization unit 12a generates the plurality of sample prompts by processing the sample data with a ground truth according to each of all the combinations of the possible values for the respective attributes.

Then, the optimization unit 12a inputs each of all the generated sample prompts to the LLM, compares the output of the LLM with the ground truth, calculates the accuracy for each combination, and extracts (generates) the combination with the highest accuracy as the prompt design information.

As a result, it is possible to easily generate a prompt that can obtain a highly accurate result from the LLM.

### (II) Description of Second Embodiment

### (A) Configuration

In the prompt adjustment device 1a of the first embodiment described above, the optimization unit 12a inputs each of all the generated sample prompts to the LLM, compares the output of the LLM with the ground truth, and calculates the accuracy for each combination. Therefore, for example, in a case where the number of attributes is large in the formulation information, the combinations of the possible values for the respective attributes becomes enormous, and the computational cost may increase.

Therefore, an object of a prompt adjustment device 1b as an example of a second embodiment is to easily generate a prompt that can obtain a highly accurate result from an LLM and to reduce a computational cost. The prompt adjustment device 1b is an information processing device that performs adjustment of a prompt to be input to a language model such that an output from the language model is highly accurate.

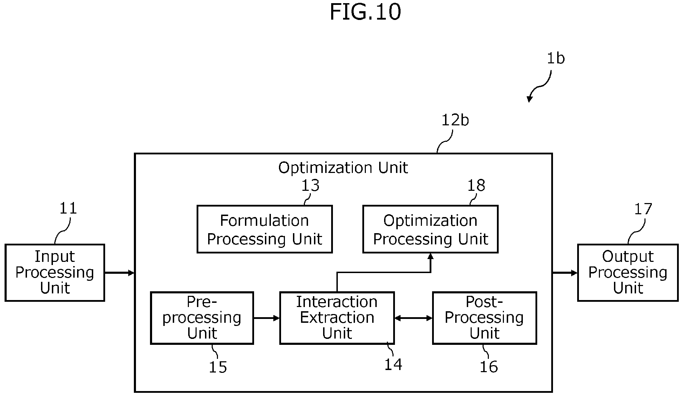

Fig. 10 is a diagram illustrating a functional configuration of the prompt adjustment device 1b as an example of the second embodiment.

As illustrated in Fig. 10, the prompt adjustment device 1b of the second embodiment includes an optimization unit 12b instead of the optimization unit 12a of the first embodiment, and other parts are configured similarly to those of the prompt adjustment device 1a of the first embodiment. In addition, the prompt adjustment device 1b of the second embodiment has a hardware configuration similar to that of the prompt adjustment device 1a of the first embodiment.

Functions of an input processing unit 11, an optimization unit 12b, and an output processing unit 17 may be implemented, for example, by the above-described processor 10a executing the program 10h (prompt adjustment program).

Furthermore, the optimization unit 12b includes an interaction extraction unit 14, a pre-processing unit 15, a post-processing unit 16, and an optimization processing unit 18 in addition to a formulation processing unit 13 similar to that of the first embodiment.

Since the reference signs that are the same as the above-described reference signs denote similar parts in the drawings, the description thereof will be omitted.

The interaction extraction unit 14 detects an interaction of a plurality of attributes for input data by using a known data mining method. Data mining for detecting the interaction of the plurality of attributes for the input data is an example of first data mining. The interaction is a synergistic effect that appears by combining the plurality of attributes. The interaction is an example of a result of the first data mining.

For example, the interaction extraction unit 14 extracts an interaction having a correct (incorrect) feature by using, as an input, comma separated values (CSV) data in which a combination of hyperparameters is an attribute, and whether or not an output matches a ground truth is a label.

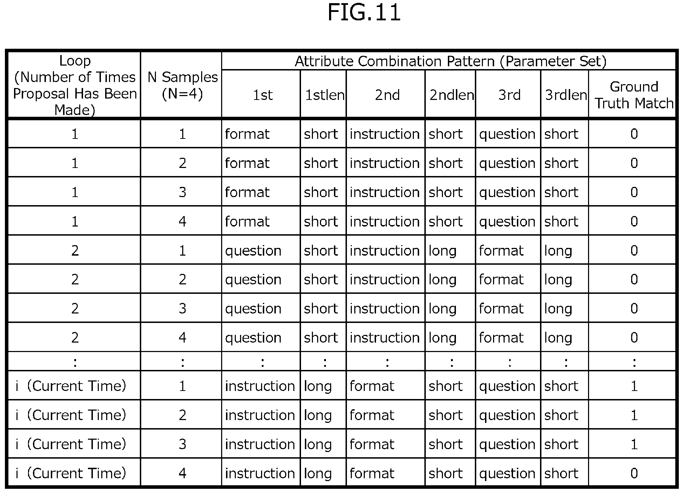

Data mining input information as illustrated in Fig. 11 may be input to the interaction extraction unit 14 in a CSV format.

Fig. 11 is a diagram illustrating the data mining input information in the prompt adjustment device 1b according to the second embodiment.

The optimization unit 12b may create the data mining input information as illustrated in Fig. 11. Similarly to the management information of the first embodiment, the data mining input information is information generated based on formulation information and sample data with a ground truth, and is formed by associating each attribute combination with information indicating whether or not an output from the LLM is the ground truth.

The interaction extraction unit 14 calculates (extract or detect) the interaction of the plurality of attributes by performing the data mining on the input data mining input information. The interaction is a synergistic effect that appears by combining the plurality of attributes.

The interaction extraction unit 14 extracts the interaction related to a combination of the attributes by the data mining. The interaction extracted by the interaction extraction unit 14 is input to a calculation term of Bayesian optimization by an optimization processing unit 18 to be described later. As a data mining method, for example, Wide Learning^{®} may be used.

The interaction extraction unit 14 performs the data mining by using, as an input, the data mining input information in which results (ground truth match) obtained by inputting a plurality of sample prompts to the LLM (language model) are associated with combinations used to generate the sample prompts.

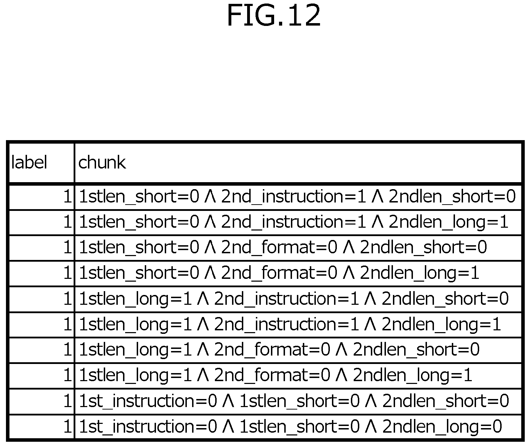

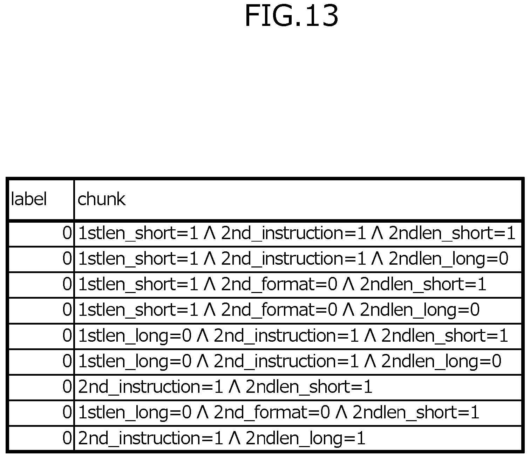

Figs. 12 and 13 are diagrams illustrating the interaction generated by the interaction extraction unit 14 of the prompt adjustment device 1b according to the second embodiment. Note that Fig. 12 illustrates an interaction with a high accuracy, and Fig. 13 illustrates an interaction with a low accuracy.

In the examples illustrated in Figs. 12 and 13, label and chunk are associated with each other. label = 1 indicates that the accuracy is high, and label = 0 indicates that the accuracy is low. chunk represents the interaction.

In addition, "^" means "and" and corresponds to AND of a logical expression. = 0/ = 1 represents that a value of a corresponding attribute is not summarized/applicable.

For example, "1stlen_short = 0 ^ 2nd_instruction = 1 ^ 2ndlen_short = 0" in the first row of Fig. 12 indicates that an attribute "1stlen" is not "short" (= 0), an attribute "2nd" is "instruction" (= 1), and an attribute "2ndlen" is not "short" (= 0). That is, a prompt that the instruction that is long (not short) is at the second position, and the length at the first position is long (not short) achieves a high accuracy.

Furthermore, "1stlen_short = 1 ^ 2nd_instruction = 1 ^ 2ndlen_short = 1" in the first row of Fig. 13 indicates that the attribute "1stlen" is "short" (= 1), the attribute "2nd" is "instruction" (= 1), and the attribute "2ndlen" is "short" (= 1). That is, a prompt in which the instruction that is short is at the second position, and the length at the first position is short achieves a low accuracy.

The interaction extraction unit 14 delivers the generated interaction to the post-processing unit 16 or the optimization processing unit 18. For example, the interaction extraction unit 14 may store the generated interaction in a predetermined storage area of the memory 10c or the storage unit 10d. The post-processing unit 16 and the optimization processing unit 18 may acquire the information by reading the information stored in such storage areas.

The pre-processing unit 15 reduces data to be processed (data mining) by the interaction extraction unit 14.

In the pre-processing unit 15, for example, conditions that are qualitatively known to result in a low accuracy (low performance) with a single attribute or a combination of attributes are listed in advance. Such a list may be referred to as an exclusion list or a skip list. The exclusion list is a list of pairs of attributes and values thereof determined by formulation. The exclusion list is stored, for example, in a predetermined storage area or the like of the storage unit 10d.

In the exclusion list, for example, a condition that a feature of a "question block" is completion (completing a sentence that has ended in the middle) and the "question block" is placed at the beginning of the prompt may be stored. The condition registered in the exclusion list may be referred to as an exclusion condition.

In addition, a condition that an expression that does not match learning data (general sentence) of the LLM is included in the exclusion list may be stored.

Further, the exclusion list may store a condition that a language is frequently switched in the middle.

Furthermore, in the pre-processing unit 15, for example, the sample prompt is created according to a pattern of a single attribute or an attribute combination pattern corresponding to the condition of the exclusion list by using the sample data with a ground truth, and it is checked in advance whether or not a result obtained by inputting the sample prompt to the LLM is truly inaccurate.

For example, the pre-processing unit 15 sets the "question block" as the m-th block from the first position for the "question block" described above by using the sample data with a ground truth, and creates a prompt, inputs the prompt to the LLM, and confirms accuracy of an output result while randomly changing to other blocks. Such a trial is repeatedly performed while switching m = 1, 2, 3, ···, and in a case where the accuracy is significantly low (for example, the accuracy is equal to or less than a threshold), a value of the "question block" is not input as the m-th block.

That is, the pre-processing unit 15 generates a sample prompt (second sample prompt) by using the sample data with a ground truth under the condition (exclusion condition) that is qualitatively known to result in a low accuracy (low performance) with a pattern of a single attribute or a combination of the attributes, and verifies in advance accuracy of a result obtained by inputting the sample prompt to the LLM. In a case where the verification result indicates that the accuracy is significantly lower than a preset threshold or the like, a combination pattern satisfying the exclusion condition is stored as a skip list, and processing {input to the LLM and processing by the interaction extraction unit 14 (data mining)} is skipped for a combination whose condition is included in the list.

As a result, the pre-processing unit 15 reduces variations of combinations of the attributes to be used in the data mining.

In a case where it is verified as a result of an experiment that the accuracy is low, the pre-processing unit 15 excludes a combination pattern satisfying the condition of the exclusion list from the processing (data mining) in the interaction extraction unit 14.

The pre-processing unit 15 compares a combination of a plurality of attributes proposed from Bayesian optimization by the optimization processing unit 13 and possible values with the above-described skip list based on the formulation information created by the formulation processing unit 18, and skips the subsequent processing (the input to the LLM and accuracy evaluation thereof, and the input to the interaction extraction unit 14) in a case where the proposed attribute pattern or attribute combination pattern is included in the exclusion condition registered in the skip list. Skipping the subsequent processing (the input to the LLM and accuracy evaluation thereof, and the input to the interaction extraction unit 14) for the attribute pattern or the attribute combination pattern satisfying the condition of the skip list may be referred to as pruning.

When a combination matching the skip list is presented from the Bayesian optimization instead of excluding the combination pattern after generating the combination pattern in advance, the pre-processing unit 15 proceeds to the next proposal loop without processing.

For example, when "1st: question" is included in the skip list, if "1st:question" is included in a proposal by the Bayesian optimization, the processing is skipped and the processing proceeds to the next proposal. As a result, the skipped combination is not added to an input to the data mining. That is, the skipped combination is not input to the LLM to calculate the accuracy, and a result thereof is not added to the input to the data mining.

The pre-processing unit 15 excludes configuration information in which the combination included in the configuration information includes a combination that satisfies the exclusion condition from a target of the data mining.

In addition, the pre-processing unit 15 excludes a combination that satisfies the exclusion condition from the target of the data mining in a case where the second sample prompt is generated with the combination that satisfies the exclusion condition by using the sample data, and accuracy of a result obtained by inputting the second sample prompt into the language model is equal to or lower than a threshold, before excluding, from the target of the data mining, the configuration information in which the combination included in the configuration information includes a combination that satisfies the exclusion condition.

The post-processing unit 16 reduces the interaction output from the interaction extraction unit 14 based on a p value using a statistical test. The p value represents a statistical probability.

The post-processing unit 16 performs a test on a combination resulting in the interaction output from the interaction extraction unit 14 and calculates the p value. A known statistical test method may be used for the test, and for example, a Breslo-Day test may be used. The post-processing unit 16 excludes the interaction whose p value is equal to or more than a threshold (for example, 0.05) from a processing target of the optimization processing unit 18 to be described later. The exclusion from the processing target of the optimization processing unit 18 may be referred to as truncation.

The post-processing unit 16 may rank (sort) whether or not the interaction obtained as a result of the data mining by the interaction extraction unit 14 is significant by the p value by the statistical test and perform the truncation.

The post-processing unit 16 performs a test as to whether the interaction of the combination of the parameters affects inference performance. The post-processing unit 16 excludes, from the processing target (search candidate) of the optimization processing unit 18, the interaction whose p value is equal to or more than the threshold (for example, 0.05), that is, the interaction that has no influence.

The post-processing unit 16 excludes the interaction (the result of the data mining) whose p value (a value indicating an influence of the result of the data mining on the inference performance) exceeds the threshold (equal to or more than the threshold in the second embodiment) from the target of the optimization.

The post-processing unit 16 performs modeling for the truncation. The post-processing unit 16 performs logistic modeling based on an effect of a factor alone and the interaction, and performs the test. Specifically, the post-processing unit 16 performs modeling by using the interaction in which a coefficient calculated by logistic regression is not 0. The post-processing unit 16 calculates effects of the interaction and each factor by logistic regression.

The optimization processing unit 18 uses the result of the data mining by the interaction extraction unit 14 to reduce the combinations of the attributes by using a known optimization method, and determines a combination for generating the prompt. As a known optimization method, for example, Bayesian optimization may be used.

The optimization processing unit 18 explicitly narrows down a search space of an acquisition function for the Bayesian optimization, and selects a parameter for generating prompt design information from the search space.

The optimization processing unit 18 searches for an adjustment item for adjusting the prompt by optimization based on the result of the data mining (interaction).

The optimization processing unit 18 receives the remaining interaction for which the truncation by the post-processing unit 16 has been performed, the remaining interaction being generated by the interaction extraction unit 14.

In the optimization processing unit 18, a time taken for the optimization is reduced by limiting the interaction to an interaction that is based on the combination of the attributes, is output from the interaction extraction unit 14, and remains by being truncated by the post-processing unit 16, and inputting the interaction to the calculation term of the Bayesian optimization to process the interaction.

The Bayesian optimization is a method of reaching an optimal solution with a small number of trials by sampling points having a high probability of the optimal solution. In performing the Bayesian optimization, variables need to be independent of each other.

Here, processing of narrowing down a search range by using the interaction in the Bayesian optimization in the optimization processing unit 18 will be described.

For example, in the formulation information and all the combinations of the possible values for the attributes illustrated in Fig. 5, the number of original search ranges is three for each of "1st", "2nd", and "3rd", and is two for each of "1stlen", "2ndlen", and "3rdlen". However, in a case where 1st (2nd or 3rd) is "question", the number of original search ranges is one (only "short") for 1stlen (2ndlen or 3rdlen).

Here, for example, it is assumed that the following two interactions are extracted from a plurality of interactions illustrated in Fig. 12.

Condition resulting in high accuracy: 1stlen_short = 0 ^ 2nd_instruction = 1 ^ 2ndlen_short = 0
Condition resulting in high accuracy: 1st_instruction = 0 ^ 1stlen_short = 0 ^ 2ndlen_short = 0

The optimization processing unit 18 calculates an AND condition of the interaction. As a result, 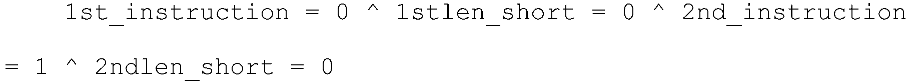 1st_instruction = 0 ^ 1stlen_short = 0 ^ 2nd_instruction = 1 ^ 2ndlen_short = 0 is obtained.

In the AND condition, the search range for 1st represents instruction = 0, that is, other than instruction. Further, the search range for 1stlen represents short = 0, that is, other than short. The search range for 2nd represents instruction = 1, that is, instruction. The search range for 2ndlen represents short = 0, that is, other than short.

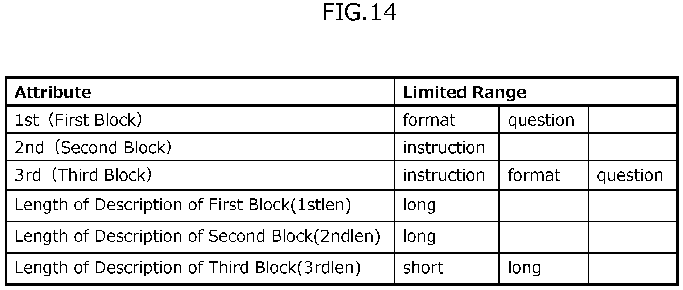

Therefore, the search range is limited as illustrated in a limited range in Fig. 14.

Fig. 14 is a diagram illustrating the limited search range. In Fig. 14, the limited search range of the Bayesian optimization is illustrated in association with each attribute.

For example, as described above, since the search range for 1st is other than instruction, format and question are set as the limited ranges in association with the attribute 1st (first block) in Fig. 14. In addition, since the search range for 2nd is instruction, instruction is set in association with the attribute 2nd (second block). The search range for 3rd is other than those for 1st and 2nd, and is thus inevitably determined if the search range for 1st is determined. A limited searched parameter set is expected to result in a high accuracy.

In the prompt adjustment device 1b of the second embodiment, after the interaction between the attributes is calculated by the interaction extraction unit 14, an interaction term is input to the Bayesian optimization in the optimization processing unit 18. The optimization processing unit 18 narrows down and determines an optimal combination by the Bayesian optimization. That is, the search space of the acquisition function for the Bayesian optimization is explicitly narrowed down using the result of the data mining, and the parameter is selected therefrom.

The optimization processing unit 18 determines, as the adjustment item, a combination that results in the highest accuracy among the combinations proposed by the Bayesian optimization. For example, the number of trials indicating how many times proposals are made may be set in advance by the Bayesian optimization, and the proposal may be repeated until the number of trials is reached.

As a result, in the optimization unit 12b, the prompt can be optimized without trying all the combinations of data by the Bayesian optimization.

Since the number of pieces of data is small immediately after the start of the processing by the optimization unit 12b, it is difficult to extract a useful interaction. However, since a data amount increases as the processing proceeds, statistical significance can be easily secured, and the optimization processing unit 18 can accelerate the narrowing.

### (B) Operation

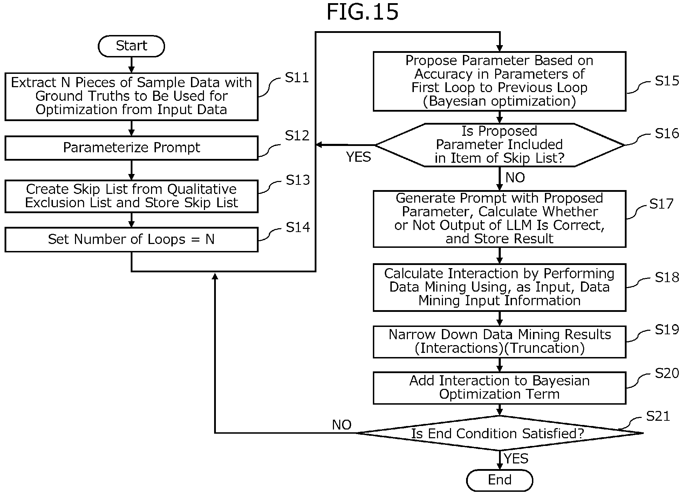

The processing in the optimization unit 12b of the prompt adjustment device 1b according to the second embodiment configured as described above will be described with reference to the flowchart (steps S11 to S21) illustrated in Fig. 15.

In step S11, the optimization unit 12b extracts a plurality of (N) pieces of sample data with ground truths to be used for optimization of the prompt from the input data stored by the input processing unit 11.

In step S12, the formulation processing unit 13 parameterizes (formulates) the configuration of one or more sample prompts to create the formulation information.

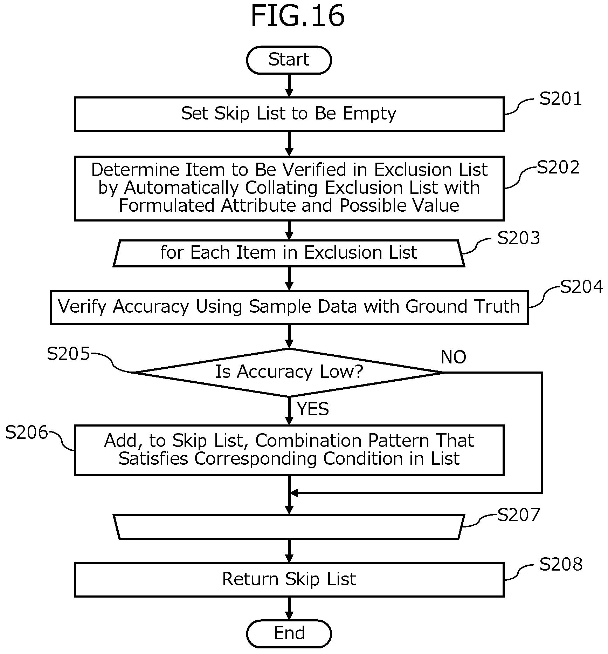

In step S13, the pre-processing unit 15 creates the skip list from the qualitative exclusion list and stores the skip list in a predetermined storage area of the memory 10c or the storage unit 10d. Details of the processing in step S13 will be described later with reference to Fig. 16.

In step S14, the optimization unit 12a sets N as the number of loops (the number of loops = N).

In step S15, the optimization processing unit 18 proposes the parameter by the Bayesian optimization based on accuracy in the parameters of the first loop to the previous loop. The proposed parameter may be referred to as a proposed parameter.

In step S16, the pre-processing unit 15 confirms whether or not the proposed parameter is included in the items of the skip list. In a case where a result of the confirmation indicates that the proposed parameter is included in the items of the skip list (see YES route of step S16), the processing returns to step S15.

In a case where the proposed parameter is not included in the items of the skip list (see NO route in step S16), the processing proceeds to step S17.

In step S17, the optimization unit 12b generates the sample prompt with the proposed parameter, calculates whether or not the output of the LLM is correct for the created sample prompt, and stores the result in a term of ground truth match in the data mining input information.

In step S18, the interaction extraction unit 14 calculates the interaction by performing the data mining using, as an input, a table indicating whether or not the parameters in the first to previous loops in the data mining input information are correct.

In step S19, the post-processing unit 16 performs the test, calculates the p value of each interaction output from the interaction extraction unit 14, excludes the interaction whose p value is equal to or more than the threshold, and performs the truncation to leave only the interaction whose p value is less than the threshold.

In step S20, the optimization processing unit 18 adds the remaining interaction to a Bayesian optimization term and selects the next parameter set.

In step S21, the optimization unit 12b confirms whether or not an end condition is satisfied. The end condition may be, for example, detecting that the accuracy of the output of the LLM has stopped improving, or reaching a predetermined number of loops, and can be implemented with appropriate modifications.

In a case where the end condition is not satisfied (see NO route in step S21), the processing returns to step S15. In a case where the end condition is satisfied (YES in step S21), the processing ends.

Next, the processing in the pre-processing unit 15 of the prompt adjustment device 1b according to the second embodiment will be described with reference to the flowchart (steps S201 to S208) illustrated in Fig. 16. The flowchart illustrated in Fig. 16 illustrates details of the processing in step S13 of the flowchart illustrated in Fig. 15.

In step S201, the pre-processing unit 15 sets the skip list to be empty. In step S202, the pre-processing unit 15 determines an item to be verified in the exclusion list by automatically collating the exclusion list with an attribute and a possible value formulated according to target data. As a result, even in a case where an attribute name/value written in the exclusion list does not completely match an attribute name/value set in the formulation, association in a case where the attribute names/values substantially match each other can be implemented. For example, such a case corresponds to a case where the attribute and the possible value are interchanged or a case where the upper case/lower case is different, like a case where the exclusion list: QUESTION: 1, and the attribute/possible value set in the formulation are "1st: question".

In step S203, loop processing of repeatedly performing control up to step S206 for all the items to be verified in the exclusion list is started.

In step S204, the pre-processing unit 15 performs pre-checking using the sample data with a ground truth. The pre-processing unit 15 verifies accuracy of a result of the LLM by using the sample prompt created with the sample data with a ground truth.

In step S205, the pre-processing unit 15 compares the accuracy of the result of the LLM with a preset threshold, for example, to confirm whether or not the accuracy of the result of the LLM is low. In a case where the accuracy of the result of the LLM is lower than the threshold, that is, in a case where the accuracy is low (see YES route of step S205), the processing proceeds to step S206.

In step S206, the pre-processing unit 15 adds, to the skip list, a combination pattern that satisfies a corresponding condition in the exclusion list. Thereafter, the processing proceeds to step S207.

In addition, as a result of the confirmation in step S205, in a case where the accuracy of the result of the LLM is equal to or higher than the threshold, that is, in a case where the accuracy is high (see NO route of step S205), the processing proceeds to step S207.

In step S207, loop end processing corresponding to step S203 is executed. Here, when the processing for all the items to be verified in the exclusion list is completed, the skip list is returned in step S208. Thereafter, the processing ends. Note that, in a case where the parameter set proposed by the Bayesian optimization matches the skip list, the optimization processing unit 18 proceeds to the next Bayesian optimization proposal without executing the subsequent processing.

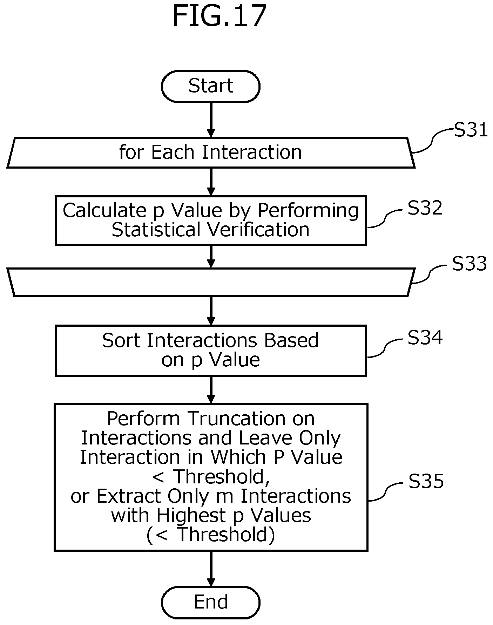

Next, the processing in the post-processing unit 16 of the prompt adjustment device 1b according to the second embodiment will be described with reference to the flowchart (steps S31 to S35) illustrated in Fig. 17.

In step S31, loop processing of repeatedly performing control of step S32 for all the interactions generated by the interaction extraction unit 14 is started.

In step S32, the post-processing unit 16 calculates the p value by using statistical verification.

In step S33, loop end processing corresponding to step S31 is executed. Here, when the processing for all the interactions is completed, the processing proceeds to step S34.

In step S34, the post-processing unit 16 sorts all the interactions based on the p values. For example, the post-processing unit 16 sorts all the interactions in ascending order based on the p value.

In step S35, the post-processing unit 16 performs the truncation for the sorted interaction row. For example, the post-processing unit 16 may select and leave only the interaction whose p value is less than the preset threshold (p value < threshold). Alternatively, the post-processing unit 16 may select (extract) and leave only a predetermined number (m) of interactions in descending order of the p values less than the threshold. Thereafter, the processing ends.

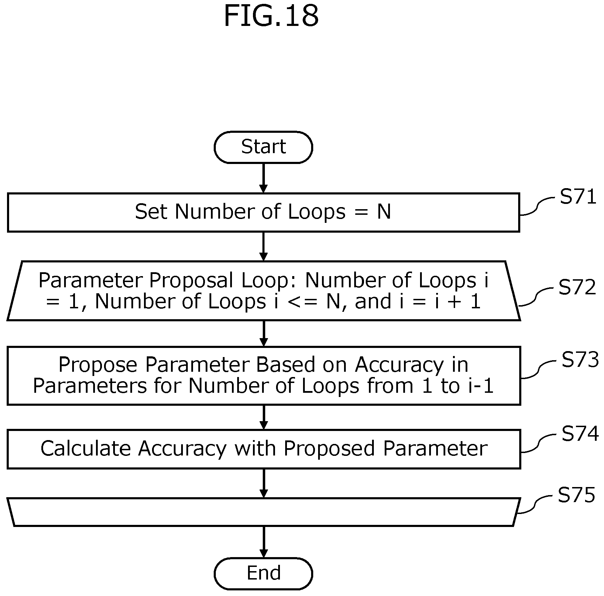

Next, Bayesian optimization processing by the optimization processing unit 18 of the prompt adjustment device 1b according to the second embodiment will be described according to the flowchart (steps S71 to S75) illustrated in Fig. 18. Note that Fig. 18 illustrates processing for maximizing the accuracy.

In step S71, the optimization processing unit 18 sets N as the number of loops (the number of loops = N). N corresponds to the number of trials indicating how many times proposals are made.

In step S72, the optimization processing unit 18 starts loop processing of repeatedly executing processing in steps S73 and S74 for all the loops represented by the total number of loops. The number of parameter proposal loops is represented by i. i is a natural number equal to or less than N, and an initial value is 1 (i = 1).

In step S73, the optimization processing unit 18 proposes the parameter (proposed parameter) by the Bayesian optimization based on the accuracy in the parameters of the number of loops from 1 to i-1.

In step S74, the optimization processing unit 18 calculates the accuracy with the proposed parameter. In step S75, loop end processing corresponding to step S72 is executed. Here, when the number of loops reaches N, the flow ends.

As described above, in the Bayesian optimization by the optimization processing unit 18, the next parameter is proposed using the results obtained so far.

### (C) Effects

As described above, in the prompt adjustment device 1b of the second embodiment, the interaction extraction unit 14 detects the interaction of the plurality of attributes by using the data mining method based on the data mining input information generated based on the formulation information and the sample data with a ground truth.

Then, the optimization processing unit 18 can improve the efficiency of the optimization method by narrowing down the combinations of the attributes by using the result of the data mining by the interaction extraction unit 14, and can determine a combination (prompt design information) for generating an accurate prompt with a limited number of loops of the Bayesian optimization from among an enormous number of combinations. That is, the optimization processing unit 18 explicitly narrows down the search space of the acquisition function for the Bayesian optimization by using the interaction obtained by the data mining, and selects the parameter therefrom.

As a result, it is possible to easily generate a prompt that can obtain a highly accurate result from the LLM in a short time with a small calculation volume. That is, a calculation time and a computational cost for generating the prompt can be reduced.

Based on the exclusion list in which the conditions that are qualitatively known to result in a low accuracy (low performance) are registered, the pre-processing unit 15 checks the combinations of the attributes in advance to generate the skip list, and performs pruning. That is, in a case where a combination of the attributes proposed by the Bayesian optimization is included in the skip list, processing of calculating the accuracy by inputting the prompt generated using the combination to the LLM and processing of using the result for the data mining are skipped. As a result, the variations of the combination of the attributes to be used in the data mining in the interaction extraction unit 14 are reduced, and accordingly, the calculation time and the computational cost can be reduced.

In addition, the pre-processing unit 15 creates the sample prompt according to the combination pattern corresponding to the condition of the exclusion list by using the sample data with a ground truth, and it is checked in advance whether or not a result obtained by inputting the sample prompt to the LLM is truly inaccurate. As a result, it is possible to improve reliability in the pruning by the pre-processing unit 15.

The post-processing unit 16 performs the test on the combination resulting in the interaction output from the interaction extraction unit 14 and calculates the p value. Then, the post-processing unit 16 performs the truncation by excluding the interaction whose p value is equal to or more than the threshold from the processing target of the optimization processing unit 18 to be described later. As a result, the calculation time and the computational cost for the Bayesian optimization by the optimization processing unit 18 can be reduced.

Further, the post-processing unit 16 reduces the interaction output from the interaction extraction unit 14 based on the p value using the statistical test. As a result, the calculation can be made efficient by not considering the interaction that is not statistically significant (hardly directly connected to accuracy). In addition, although interactions of order variables are not independent, the Bayesian optimization can be used because performing the test also ensures the independence between the attributes in the test.

By calculating the interaction between the statistically significant attributes by the interaction extraction unit 14, it is possible to ensure the independence between the terms input for the Bayesian optimization in the optimization processing unit 18. In addition, the post-processing unit 16 performs the test to calculate the p value, and limits the number of interaction terms with the p value to perform the Bayesian optimization, so that the prompt can be optimized while reducing the calculation time and the computational cost without trying all the combinations of data.

### (III) Description of Third Embodiment

As described above, in the prompt adjustment device 1a of the first embodiment, for example, in a case where the number of attributes is large in the formulation information, the number of combinations of the possible values for the respective attributes may be enormous, and the computational cost may increase.

In the prompt adjustment device 1b of the second embodiment, the combinations of the attributes are narrowed down using the result of the data mining, but the number of combinations of the attributes may be enormous even after such narrowing. For example, even if 700 million candidates are narrowed down to 1/1000, there are still 700,000 candidates.

In addition, even if the combinations of the attributes are successfully narrowed down, it is difficult to determine which combination results in a highly accurate output from the language model among the narrowed down combinations. It is difficult to predict an optimal combination only from information indicating "accuracy resulting from each combination".

In a prompt adjustment device 1c according to a third embodiment, how much accuracy is improved is predicted for a combination of attributes, and the combination of the attributes resulting in improved accuracy is output as a recommended combination, thereby implementing more efficient prompt optimization.

The prompt adjustment device 1c is an information processing device that performs adjustment of a prompt to be input to a language model such that an output from the language model is highly accurate.

### (A) Configuration

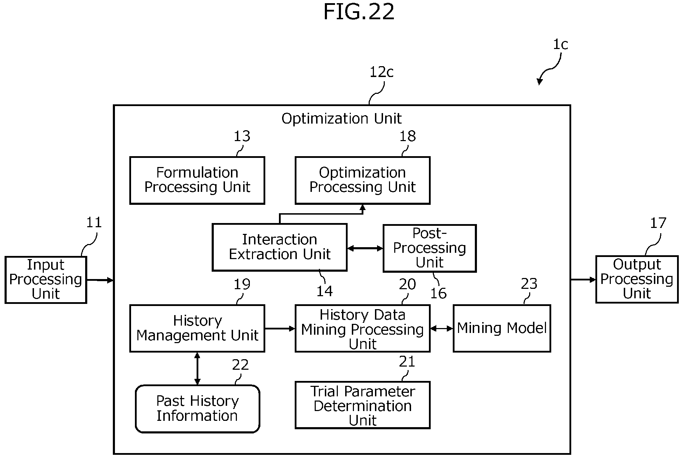

Fig. 22 is a diagram illustrating a functional configuration of the prompt adjustment device 1c as an example of the third embodiment.

The prompt adjustment device 1c of the third embodiment illustrated in Fig. 22 includes an optimization unit 12c instead of the optimization unit 12b of the second embodiment, and other parts are configured similarly to those of the prompt adjustment device 1b of the second embodiment.

In addition, the optimization unit 12c includes a history management unit 19, a history data mining processing unit 20, and a trial parameter determination unit 21 instead of the pre-processing unit 15 of the optimization unit 12b of the second embodiment. The other parts are configured similarly to those of the prompt adjustment device 1b of the second embodiment. In addition, the prompt adjustment device 1c of the third embodiment has a hardware configuration similar to those of the prompt adjustment device 1a of the first embodiment and the prompt adjustment device 1b of the second embodiment.

Functions of an input processing unit 11, the optimization unit 12c, and an output processing unit 17 may be implemented, for example, by the above-described processor 10a executing the program 10h (prompt adjustment program).

Since the reference signs that are the same as the above-described reference signs denote similar parts in the drawings, the description thereof will be omitted.

The history management unit 19 manages a combination (item combination) of parameters determined as adjustment items by an optimization processing unit 18 and accuracy of a result obtained by inputting a prompt (sample prompt, first sample prompt, and second sample prompt) created based on the combination to a LLM in association with each other. Inputting the prompt created based on the item combination to the LLM may be referred to as a trial. Further, the accuracy of the result obtained by inputting the prompt created based on the combination to the LLM may be simply referred to as accuracy of the combination. The accuracy of the result obtained by inputting the prompt to the LLM is an example of a first result and a second result.

The history management unit 19 stores a plurality of combinations determined by the optimization processing unit 18 as past history information 22 in a predetermined storage area such as the storage unit 10d or the memory 10c in association with each combination and the accuracy thereof.

The history data mining processing unit 20 performs data mining on the past history information 22. Therefore, after a plurality of trials performed while changing the parameter are performed, the history data mining processing unit 20 executes processing based on the past history information 22 in which results of the trials are stored.

The history data mining processing unit 20 performs second data mining by using a mining model 23.

The history data mining processing unit 20 creates (trains) the mining model 23 in a training phase (learning phase), and evaluates the item combination (second data mining) by using the mining model 23 in a prediction phase. The mining model 23 is a machine learning model to which a past parameter (third combination) and a parameter candidate (fourth combination candidate) are input and which outputs prediction accuracy for the parameter candidate.

In the training phase, the history data mining processing unit 20 first creates training data 24 to be input to the mining model 23.

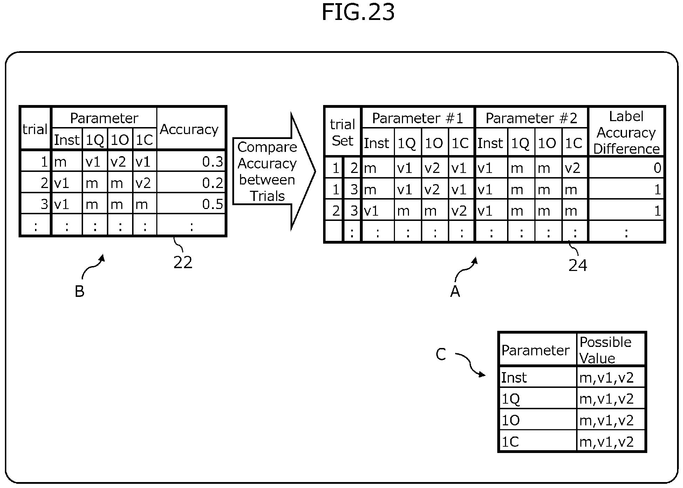

Fig. 23 is a diagram for describing a method of creating the training data 24 by the history data mining processing unit 20 of the prompt adjustment device 1c as an example of the third embodiment.

In Fig. 23, reference sign A indicates an example of the training data 24, and reference sign B indicates an example of the past history information 22 used to create the training data 24. In addition, reference sign C indicates possible values of each parameter in the past history information 22.

The past history information 22 illustrated in Fig. 23 associates the combination (parameter) of the attributes in each trial with information indicating the accuracy thereof for a plurality of trials, and includes the trial, the parameter, and the accuracy.

The trial is identification information for specifying a trial, and an integer is used in the example illustrated in Fig. 23. In the past history information 22 illustrated in Fig. 23, a state in which processing has ended until the third trial (trial = 3) is illustrated, and three trials performed in the order of trial = 1, trial = 2, and trial = 3 are registered.

The parameter includes a plurality of attributes. In the example illustrated in Fig. 23, the parameter includes four attributes, Inst, 1Q, 1O, and 1C. Furthermore, in the example illustrated in Fig. 23, the possible values for each of the attributes, Inst, 1Q, 1O, and 1C, are m, v1, and v2 as indicated by reference sign C.

The accuracy is the accuracy of the result obtained by inputting the prompt created based on the parameter (combination) to the LLM, and is the accuracy of the combination. It is assumed that accuracy calculation is performed for each parameter in each trial. The accuracy calculation for the parameter in each trial may be performed by the optimization processing unit 18 using a known method, for example.

Since all the trials registered in the past history information 22 have been input to the LLM and have been subjected to the accuracy calculation, the trials may be referred to as past trials.

The history data mining processing unit 20 creates the training data 24 by using the past history information 22.

The training data 24 illustrated in Fig. 23 includes a trial set, a parameter #1, a parameter #2, and a label accuracy difference.

The trial set in the training data 24 is a combination of two trials selected from a plurality of past trials included in the past history information 22. The two trials included in the trial set may be referred to as a first trial and a second trial. The accuracy calculation for the second trial may be performed after that for the first trial. In particular, the second trial may be referred to as a current trial, and the first trial may be referred to as a past trial.

The parameter #1 in the training data 24 is a parameter in the past trial (first trial), and the parameter #2 is a parameter in the current trial (second trial).

The label accuracy difference in the training data 24 represents a comparison result between the accuracy of the parameter #1 and the accuracy of the parameter #2. For example, 1 is set in a case where the accuracy of the parameter #2 is higher than the accuracy of the parameter #1, and 0 is set in a case where the accuracy of the parameter #2 is equal to or lower than the accuracy of the parameter #1. That is, the label accuracy difference indicates a parameter with a higher accuracy for the two trials included in the trial set. The label accuracy difference is an example of comparison information indicating a comparison result between the first result (the accuracy of the parameter # 1) and the second result (the accuracy of the parameter # 2).

In the training data 24, the parameter #1 corresponds to a first combination of possible values for each of a plurality of items, the first combination being used to generate the first sample prompt among a plurality of sample prompts. In addition, the parameter #2 corresponds to a second combination of possible values for each of the plurality of items, the second combination being used to generate the second sample prompt among the plurality of sample prompts.

In addition, accuracy of the first sample prompt in the past history information 22 corresponds to the first result obtained by inputting the first sample prompt to the LLM. In addition, accuracy of the second sample prompt corresponds to the second result obtained by inputting the second sample prompt to the LLM. The label accuracy difference may include the first result and the second result.

A combination of the parameter #1 and the accuracy (first result) obtained by inputting the first sample prompt created using the parameter #1 to the LLM may be referred to as first information. Further, the first information may be referred to as past trial information. A combination of the parameter #2 and the accuracy (second result) obtained by inputting the second sample prompt created using the parameter #2 to the LLM may be referred to as second information. Further, the second information may be referred to as current trial information.

In the training data 24, all combinations (trial sets) based on the plurality of trials are desirably registered. For example, in a case where three trials of trial = 1, trial = 2, and trial = 3, are registered in the past history information 22, three trial sets of (1,2), (1,3), and (2,3) are desirably registered in the training data 24.

The history data mining processing unit 20 creates the mining model 23 by using the created training data 24. The history data mining processing unit 20 creates the mining model 23 by using a combination of the parameter #1 and the parameter #2 in the training data 24 as data of one row (input data) and using the label accuracy difference as a label (ground truth data and teacher data). The history data mining processing unit 20 generates the training data 24 by combining the past trials, and performs data mining based on the training data 24.

Information in which the accuracy (first result) obtained by inputting the first sample prompt (first prompt) to the LLM and the parameter #1 used to generate the first prompt are associated with each other is an example of the first information. Further, information in which the accuracy (second result) obtained by newly inputting the second sample prompt (second prompt) to the LLM and the parameter #2 used to generate the second prompt are associated with each other is an example of the second information. In the training phase, the second data mining is performed using the first information and the second information as inputs.

For example, the history data mining processing unit 20 adds a result of the data mining to a Bayesian optimization term, thereby predicting "whether or not the accuracy is improved" by the parameter.

In addition, the history data mining processing unit 20 creates prediction data 25 to be input to the mining model 23 in the prediction phase.

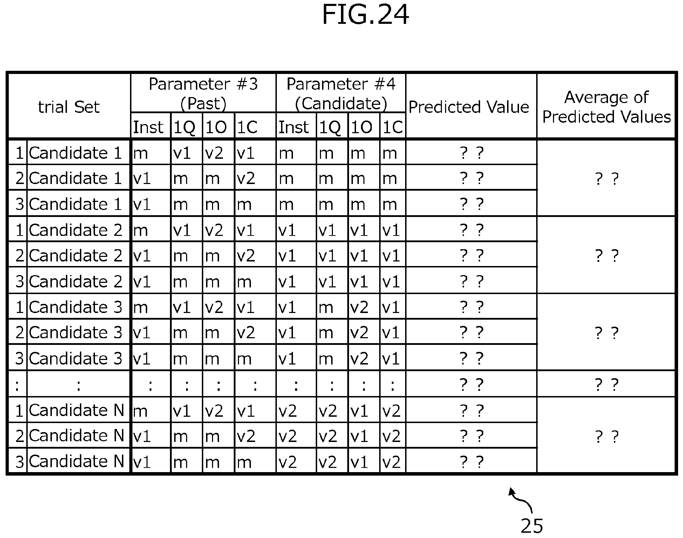

Fig. 24 is a diagram illustrating the prediction data 25 in the prompt adjustment device 1c as an example of the third embodiment.

The prediction data 25 illustrated in Fig. 24 includes a trial set, a parameter #3, a parameter #4, a predicted value, and an average of predicted values.

The trial set in the prediction data 25 is a combination of one trial (past trial) selected from the plurality of past trials included in the past history information 22 and a trial (trial candidate) based on a parameter candidate (parameter candidate) proposed by the prompt adjustment device 1c.

In the example illustrated in Fig. 24, the trial candidate is identified using an identifier obtained by combining a character string "candidate" and an integer.

The history data mining processing unit 20 desirably prepares a plurality of types of parameter candidates. The parameter candidates includes a parameter different from the past trial registered in the past history information 22. The parameter candidate may be created using various known methods, and a detailed description of a method of creating the parameter candidate will be omitted. As an example, the parameter candidates may be narrowed down by using an interaction. In the example illustrated in Fig. 24, N types of parameter candidates (candidates 1 to N) are illustrated.

Among the two trials included in the trial set in the prediction data 25, the past trial may be referred to as a third trial, and the trial candidate may be referred to as a fourth trial. The third trial may be referred to as a past trial, and the fourth trial may be referred to as a current trial.

The parameter #3 in the prediction data 25 is a parameter in the past trial (third trial). The parameter #3 in the prediction data 25 may be referred to as a past parameter. The parameter #3 is an example of a third combination of possible values for each of the plurality of items, the third combination being used to generate a sample prompt (third sample prompt) created in the past.

The parameter #4 in the prediction data 25 is a parameter in the trial candidate (fourth trial). The parameter #4 in the prediction data 25 may be referred to as a parameter candidate. The parameter #4 is an example of a fourth combination candidate of possible values for each of the plurality of items for use in generating a prompt to be newly created (fourth sample prompt).

In the prediction data 25 illustrated in Fig. 24, sorting based on an identifier for specifying the trial candidate is performed for convenience. Therefore, the trial candidates of the same identifier are consecutive.

The predicted value in the prediction data 25 is a predicted value of the accuracy of the trial candidate (fourth trial) and is a value predicted by the mining model 23, and thus is undetermined (??). Since the average of predicted values is an average of the predicted values, the average of predicted values is also undetermined (??).

In the prediction data 25, all the trials of the past history information 22 are desirably set as the parameter #3. Further, it is desirable that a plurality of trial candidates are set as the parameter #4.

As illustrated in Fig. 24, for example, in a case where three trials of trial = 1, trial = 2, and trial = 3 are registered in the past history information 22, and N trial candidates are set, all combinations of the three past trials and the N trial candidates are desirably set as the trial sets in the training data 24.

The history data mining processing unit 20 inputs the created prediction data 25 to the mining model 23 to obtain an output.

The mining model 23 outputs the predicted value of the accuracy of the trial candidate (fourth trial) for each trial set of the prediction data 25. In the prediction phase, the history data mining processing unit 20 obtains the prediction accuracy for the parameter candidate by inputting the parameter #3 (past parameter) and the parameter #4 (parameter candidate) to the mining model 23 (machine learning model).

The history data mining processing unit 20 may create output information 26 by using the predicted value for each trial set obtained from the mining model 23.

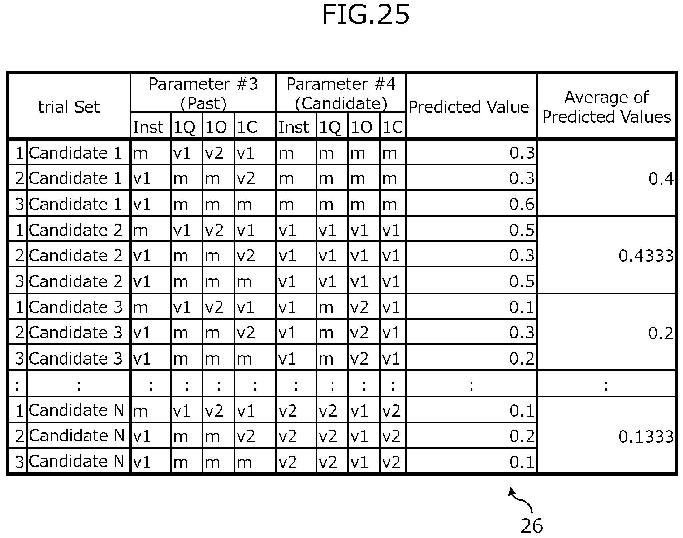

Fig. 25 is a diagram illustrating the output information 26 in the prompt adjustment device 1c as an example of the third embodiment.

The output information 26 illustrated in Fig. 25 is configured by registering the predicted value obtained from the mining model 23 in the prediction data 25 illustrated in Fig. 24.

In the output information 26 illustrated in Fig. 25, for example, for a trial set (1 and candidate 1) including the past trial represented by "trial = 1" and the trial candidate represented by "candidate 1", "0.3" is set as the predicted value of the accuracy of the trial candidate represented by "candidate 1". Furthermore, for example, for a trial set (2 and candidate 1) including the past trial represented by "trial = 2" and the trial candidate represented by "candidate 1", "0.3" is set as the predicted value of the accuracy of the trial candidate represented by "candidate 1".

In addition, the history data mining processing unit 20 may calculate the average of predicted values for each trial candidate based on each predicted value calculated by the mining model 23 and register the average in the output information 26.

In the output information 26 illustrated in Fig. 25, for example, the predicted value of the trial set (1 and candidate 1) is "0.3", the predicted value of the trial set (2 and candidate 1) is "0.3", and the predicted value of the trial set (3 and candidate 1) is "0.6". Therefore, the average of predicted values of the trial candidate represented by "candidate 1" is calculated as 0.4 {= (0.3 + 0.3 + 0.6)/3}.

That is, the output information 26 illustrated in Fig. 25 is created by registering the predicted value of each trial set obtained by the mining model 23 and the average of predicted values for each trial candidate calculated by the history data mining processing unit 20 in the prediction data 25 illustrated in Fig. 24.

The history data mining processing unit 20 stores the created output information 26 in a predetermined storage area such as the memory 10c or the storage unit 10d.

The trial parameter determination unit 21 determines an optimal combination (parameter) based on the output information 26 created by the history data mining processing unit 20.

The trial parameter determination unit 21 determines, as a parameter of the next trial, a parameter (parameter candidate) of a trial candidate having the highest average of predicted values, that is, the highest accuracy, in the output information 26.

For example, in the example illustrated in Fig. 25, it is assumed that the average of predicted values of the trial candidate represented by "candidate 2" is 0.4333 and is the highest.

In such a case, the trial parameter determination unit 21 determines (adopts) the parameter (v1, v1, v1, v1) of the trial candidate represented by "candidate 2" as the parameter to be used in the next trial.

In addition, in the case of determining a plurality of parameters, the trial parameter determination unit 21 may select the trial candidates as many as needed from among the plurality of trial candidates of the output information 26 in order from a trial candidate with the highest average of predicted values.

### (B) Operation

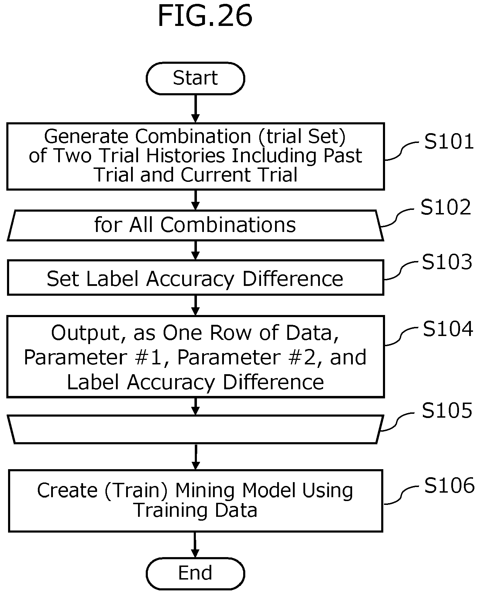

The processing in the training phase of the history data mining processing unit 20 in the prompt adjustment device 1c according to the third embodiment configured as described above will be described with reference to the flowchart (steps S101 to S106) in Fig. 26.

In step S101, the history data mining processing unit 20 creates the trial set by combining two trials (the past trial and the current trial) selected from the plurality of past trials included in the past history information 22. The history data mining processing unit 20 desirably creates all the combinations of the plurality of trials of the past history information 22 as the trial sets.

In step S102, loop processing of repeatedly performing control up to step S104 for all the trial sets is started.

In step S103, the history data mining processing unit 20 sets the label accuracy difference by comparing the accuracy of the parameter #1 for the past trial with the accuracy of the parameter #2 for the current trial.

For example, the history data mining processing unit 20 sets 1 as the label accuracy difference in a case where the accuracy of the parameter #2 is higher than the accuracy of the parameter #1, and sets 0 as the label accuracy difference in a case where the accuracy of the parameter #2 is equal to or lower than the accuracy of the parameter #1.

In step S104, the history data mining processing unit 20 outputs data of one row obtained by combining the parameter #1, the parameter #2, and the label accuracy difference as one element of the training data 24.

In step S105, loop end processing corresponding to step S102 is executed. When the processing for all the trial sets is completed, the processing proceeds to step S106.

In step S106, the history data mining processing unit 20 creates the mining model 23 by using the created training data 24. Thereafter, the processing ends.

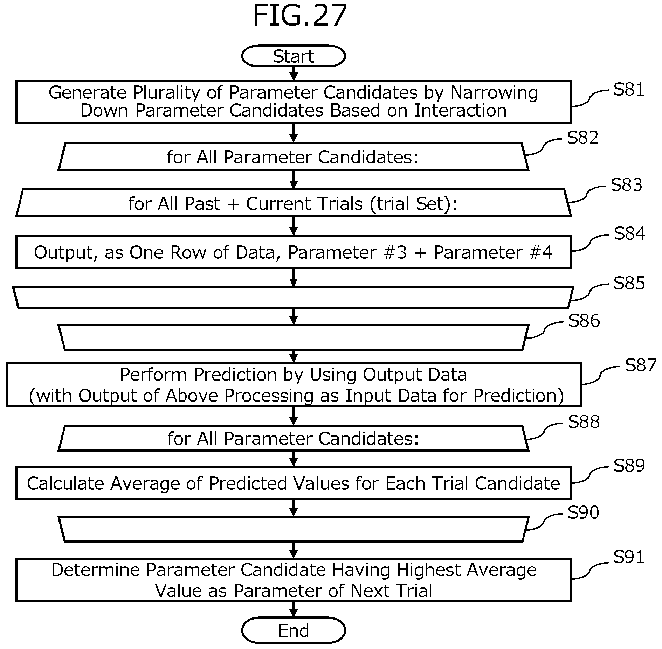

Next, the processing in the prediction phase of the prompt adjustment device 1c according to the third embodiment will be described according to the flowchart (steps S81 to S91) illustrated in Fig. 27.

First, in the following processing in steps S81 to S86, the prediction data 25 is created. In step S81, the history data mining processing unit 20 generates a plurality of parameter candidates for the trial candidate by using a known method. For example, the history data mining processing unit 20 may generate the plurality of parameter candidates by narrowing down the parameter candidates based on the interaction.

In step S82, loop processing of repeatedly performing control of step S84 for all the parameter candidates is started.

In step S83, loop processing of repeatedly performing control up to step S84 for all the trial sets (sets of the past trials and the current trial) is started.

In step S84, the history data mining processing unit 20 creates the element of the prediction data 25 by combining the parameter (parameter #3) of the past trial and the parameter (parameter #4) of the current trial.

In step S85, loop end processing corresponding to step S83 is executed. When the processing for all the trial sets is completed, the processing proceeds to step S86.

In step S86, loop end processing corresponding to step S82 is executed. When the processing for all the parameter candidates is completed, the processing proceeds to step S88.

In step S87, the history data mining processing unit 20 inputs the prediction data 25 to the mining model 23, and obtains the predicted value of the accuracy of the trial candidate (fourth trial) for each trial set (for each element) of the prediction data 25. The history data mining processing unit 20 may register the predicted value output from the mining model 23 in the output information 26.

In step S88, loop processing of repeatedly performing control of step S89 for all the parameter candidates is started.

In step S89, the history data mining processing unit 20 calculates the average of predicted values for each trial candidate based on each predicted value calculated by the mining model 23. The history data mining processing unit 20 may register the calculated average of predicted values in the output information 26.

In step S90, loop end processing corresponding to step S88 is executed. When the processing for all the parameter candidates is completed, the processing proceeds to step S91.

In step S91, the trial parameter determination unit 21 determines, as the parameter of the next trial, the parameter (parameter candidate) of the trial candidate having the highest average of predicted values, that is, the highest accuracy.

### (C) Effects

With the prompt adjustment device 1c according to the third embodiment, it is possible to obtain the same operation and effect as those of the second embodiment described above.

Further, the history data mining processing unit 20 trains the mining model 23 by using the training data 24 in which each of the parameters of two trials (the first trial and the second trial) selected from the plurality of past trials included in the past history information 22 are associated with the label accuracy differences of the trials. Then, the prediction data 25 obtained by combining the past parameter of the past trial and the parameter candidate of the trial candidate is input to the mining model 23 to obtain the predicted value of the accuracy of the trial candidate.

As a result, a trial candidate having the highest predicted value of the accuracy can be selected from the plurality of trial candidates, and a prompt that can obtain a highly accurate result from the LLM can be generated in a short time. That is, a calculation time and a computational cost for generating the prompt can be reduced.

In addition, since the parameter (combination) with improved accuracy can be output, prompt optimization can be efficiently implemented.

Furthermore, in the past history information 22, each parameter and each accuracy of the actually performed two trials are managed. Then, the history data mining processing unit 20 creates the training data 24 in which the combination of the parameters of the two past trials and the accuracy difference thereof are associated with each other based on the past history information 22. By inputting the prediction data 25 obtained by combining the past parameter and the parameter candidate to the mining model 23 created using such training data 24, it is possible to predict how much the accuracy of the parameter candidate is improved relative to the past parameter. Therefore, it is possible to easily specify the parameter candidate expected to improve the accuracy.

### (IV) Others

The disclosed technology is not limited to the above-described embodiment, and various modifications can be made without departing from the gist of each embodiment. Each configuration and each process of each embodiment can be selected as needed, or may be appropriately combined.

For example, in the prompt adjustment device 1b of the second embodiment described above, at least one of the pre-processing unit 15 and the post-processing unit 16 may be excluded from the configuration.

In addition, in the second embodiment described above, the post-processing unit 16 performs the statistical test in order to narrow down the interactions, but the disclosed technology is not limited thereto.

For example, the post-processing unit 16 may extract a plurality of (n) interactions by using a specific method, and input only the n interactions to the Bayesian optimization term.

As a specific method of extracting n interactions, the post-processing unit 16 may randomly extract n interactions, for example.

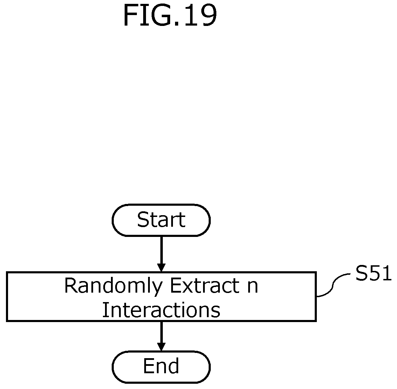

Fig. 19 illustrates a modification of the flowchart illustrated in Fig. 17. In the post-processing unit 16, the processing of the flowchart illustrated in Fig. 19 may be executed instead of the processing illustrated in the flowchart of Fig. 17.

In the flowchart illustrated in Fig. 19, in step S51, the post-processing unit 16 randomly extracts n interactions, and ends the processing.

In addition, the post-processing unit 16 may calculate a weight of each interaction by logistic regression, extract m interactions in order of absolute values of coefficients, and randomly extract n interactions from the m interactions. Note that m interactions extracted in order of absolute values of coefficients are important interactions for accuracy prediction.

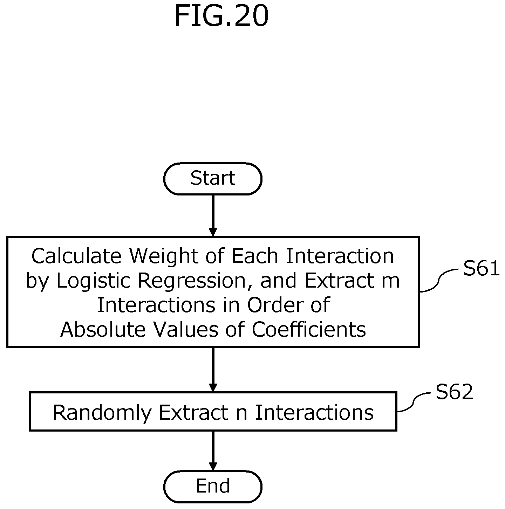

Fig. 20 illustrates another modification of the flowchart illustrated in Fig. 17. In the post-processing unit 16, the processing of the flowchart illustrated in Fig. 20 may be executed instead of the processing illustrated in the flowchart of Fig. 17.

In the flowchart illustrated in Fig. 20, in step S61, the post-processing unit 16 calculates a weight of each interaction by logistic regression, and extracts m interactions in order of absolute values of coefficients.

Thereafter, in step S62, the post-processing unit 16 randomly extracts n interactions from the m interactions. Thereafter, the processing ends.

Furthermore, in each of the embodiments described above, the formulation processing unit 13 may represent an order from the first position in the prompt in the formulation information by using a Lehmer code.

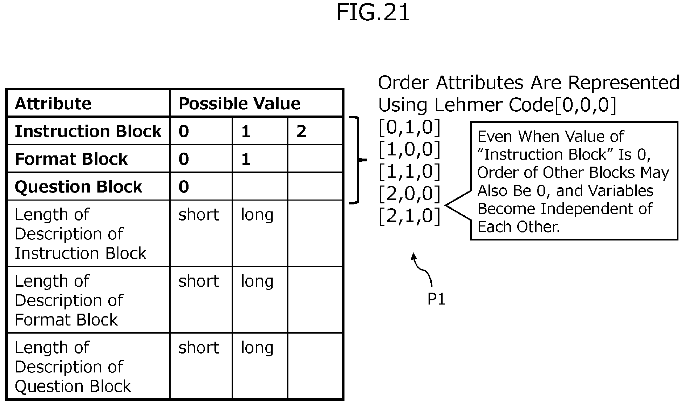

Fig. 21 is a diagram illustrating a modification of the formulation information. In the formulation information exemplified in Fig. 21, the attribute of the order is represented using a Lehmer code.

In the formulation information illustrated in Fig. 21, the Instruction block, the Question block, and the Format block as the attributes, and possible values as the Lehmer codes are indicated in association with each other.

As a result, the possible value (the attribute of the order) for each attribute can be represented by the Lehmer code (see reference sign P1). By representing the order of the attribute by the Lehmer code, for example, even when the Instruction block is 0, the order of other blocks may be 0, and the variables become independent of each other. For example, in the Bayesian optimization, the variables need to be independent of each other. However, since the independence can be ensured by applying the Lehmer code, the Bayesian optimization can be applied to the optimization.

Note that, in the example illustrated in Fig. 21, in addition to the Instruction block, the Format block, and the Question block described above, a length of a description of the Instruction block, a length of a description of the Format block, and a length of a description of the Question block are also set as the attributes. The possible values for the length of the description of the Instruction block, the length of the description of the Format block, and the length of the description of the Question block are short and long.

In addition, in the second embodiment described above, the pre-processing unit 15 lists a single attribute or a combination of the attributes resulting in a low accuracy (low performance), but the disclosed technology is not limited thereto. The pre-processing unit 15 may list a single attribute or a combination of the attributes resulting in a high accuracy (high performance).

The configuration of the prompt is not limited to that illustrated in Fig. 3. In addition, the formulation information is not limited to those illustrated in Figs. 4, 5, 21, and the like.

In the prompt adjustment device 1c of the third embodiment described above, for a plurality of combinations determined by the optimization processing unit 18 described in detail in the second embodiment, each combination and the accuracy thereof are stored in association with each other as the past history information 22, and the history data mining processing unit 20 performs the data mining on the past history information 22, but the disclosed technology is not limited thereto.

For example, for a plurality of combinations determined based on the prompt design information extracted (generated) by the optimization unit 12a described in detail in the first embodiment, each combination and the accuracy thereof may be stored in association with each other as the past history information 22, and the history data mining processing unit 20 may perform the data mining on the past history information 22. That is, the prompt adjustment device 1a of the first embodiment and the prompt adjustment device 1c of the third embodiment may be implemented in combination.

In addition, in the third embodiment described above, the history data mining processing unit 20 creates the training data 24 by creating the combination (trial set) of the plurality of trials and then setting the label accuracy difference by loop processing, and inputs the training data 24 created in this manner to the mining model 23 as illustrated in Fig. 26, but the disclosed technology is not limited thereto.

Each time one trial is performed, the history data mining processing unit 20 may create the training data 24 in which the parameter #1 of the first trial (past trial), the parameter #2 of the third trial {current (latest) trial}, and the accuracy difference thereof are combined, and input the training data 24 to the mining model 23.

Furthermore, in the third embodiment described above, the history data mining processing unit 20 calculates the average of predicted values for each trial candidate based on each predicted value calculated by the mining model 23 and registers the average in the output information 26, but the disclosed technology is not limited thereto. For example, instead of the average of predicted values, "an average value of a probability that the accuracy is improved relative to the parameter #3" may be used.

In addition, the prompt adjustment device 1c according to the third embodiment described above includes the history management unit 19, the history data mining processing unit 20, and the trial parameter determination unit 21 in the optimization unit 12c instead of the pre-processing unit 15 of the optimization unit 12b according to the second embodiment, but is not limited thereto. The optimization unit 12c of the third embodiment may include the pre-processing unit 15, and various modifications can be made.

Furthermore, according to the disclosure described above, each embodiment can be carried out and manufactured by those skilled in the art.

### [Description Reference Signs]

- 1a, 1b, 1c: Prompt adjustment device
- 10: Computer
- 10a: Processor
- 10b: Graphic processing device
- 10c: Memory
- 10d: Storage unit
- 10e: IF unit
- 10f: IO unit
- 10g: Reading unit
- 10h: Program
- 10i: Recording medium
- 10j: Bus
- 11: Input processing unit
- 12a, 12b, 12c: Optimization unit
- 13: Formulation processing unit
- 14: Interaction extraction unit
- 15: Pre-processing unit
- 16: Post-processing unit
- 17: Output processing unit
- 18: Optimization processing unit
- 19: History management unit
- 20: History data mining processing unit
- 21: Trial parameter determination unit
- 22: Past history information
- 23: Mining model
- 24: Training data
- 25: Prediction data
- 26: Output information

## Claims

1. A prompt adjustment program that causes a computer to execute a process comprising:
generating, based on configuration information in which a configuration of a prompt is represented by a combination of a plurality of items corresponding to a plurality of blocks included in the prompt and possible values for the respective items, a plurality of sample prompts corresponding to a plurality of types of the combination; and
determining, as an adjustment item for adjusting the prompt, an item included in the combination used to generate a sample prompt that yields a result with a highest inference accuracy among results obtained by inputting the plurality of sample prompts into a language model.

2. A prompt adjustment program that causes a computer to execute a process comprising:
generating, based on configuration information in which a configuration of a prompt is represented by a combination of a plurality of items corresponding to a plurality of blocks included in the prompt and possible values for the respective items, a plurality of sample prompts corresponding to a plurality of types of the combination;
performing first data mining by using, as an input, information in which results obtained by inputting the plurality of sample prompts to a language model are associated with the combinations used to generate the sample prompts; and
searching for an adjustment item for adjusting the prompt by optimization based on a result of the first data mining.

3. The prompt adjustment program according to claim 2, wherein the computer is caused to execute a process comprising skipping the first data mining for configuration information in which the combination included in the configuration information includes a combination that satisfies an exclusion condition.

4. The prompt adjustment program according to claim 3, wherein the computer is caused to execute a process comprising skipping the first data mining for the combination that satisfies the exclusion condition in a case where a second sample prompt is generated with the combination that satisfies the exclusion condition by using sample data, and accuracy of a result obtained by inputting the second sample prompt into the language model is equal to or lower than a threshold, before skipping the first data mining for configuration information in which the combination included in the configuration information includes a combination that satisfies the exclusion condition.

5. The prompt adjustment program according to any one of claims 2 to 4, wherein the computer is caused to execute a process comprising excluding, from a target of the optimization, a result of the first data mining in which a value indicating an influence of the result of the first data mining on inference performance exceeds a threshold.

6. The prompt adjustment program according to claim 2, wherein the processing of searching for the adjustment item includes processing of explicitly narrowing down a search space of an acquisition function for the optimization by using the result of the first data mining, and selecting the adjustment item from within a narrowed range.

7. The prompt adjustment program according to claim 1 or 2, wherein the item represents a position of the block in the prompt.

8. The prompt adjustment program according to claim 1 or 2, wherein the item represents an expression variation of the block in the prompt.

9. A prompt adjustment method being executed by a computer, the prompt adjustment method comprising:
generating, based on configuration information in which a configuration of a prompt is represented by a combination of a plurality of items corresponding to a plurality of blocks included in the prompt and possible values for the respective items, a plurality of sample prompts corresponding to a plurality of types of the combination; and
determining, as an adjustment item for adjusting the prompt, an item included in the combination used to generate a sample prompt that yields a result with a highest inference accuracy among results obtained by inputting the plurality of sample prompts into a language model.

10. A prompt adjustment method being executed by a computer, the prompt adjustment method comprising:
generating, based on configuration information in which a configuration of a prompt is represented by a combination of a plurality of items corresponding to a plurality of blocks included in the prompt and possible values for the respective items, a plurality of sample prompts corresponding to a plurality of types of the combination;
performing first data mining by using, as an input, information in which results obtained by inputting the plurality of sample prompts to a language model are associated with the combinations used to generate the sample prompts; and
searching for an adjustment item for adjusting the prompt by optimization based on a result of the first data mining.

11. The prompt adjustment method according to claim 10, wherein the computer executes processing of skipping the first data mining for configuration information in which the combination included in the configuration information includes a combination that satisfies an exclusion condition.

12. The prompt adjustment method according to claim 11, wherein the computer executes processing of skipping the first data mining for the combination that satisfies the exclusion condition in a case where a second sample prompt is generated with the combination that satisfies the exclusion condition by using sample data, and accuracy of a result obtained by inputting the second sample prompt into the language model is equal to or lower than a threshold, before skipping the first data mining for configuration information in which the combination included in the configuration information includes a combination that satisfies the exclusion condition.

13. The prompt adjustment method according to any one of claims 10 to 12, wherein the computer executes processing of excluding, from a target of the optimization, a result of the first data mining in which a value indicating an influence of the result of the first data mining on inference performance exceeds a threshold.

14. The prompt adjustment method according to claim 10, wherein the processing of searching for the adjustment item includes processing of explicitly narrowing down a search space of an acquisition function for the optimization by using the result of the first data mining, and selecting the adjustment item from within a narrowed range.

15. The prompt adjustment method according to claim 9 or 10, wherein the item represents a position of the block in the prompt.

16. The prompt adjustment method according to claim 9 or 10, wherein the item represents an expression variation of the block in the prompt.

17. An information processing device comprising a controller configured to execute a process comprising:
generating, based on configuration information in which a configuration of a prompt is represented by a combination of a plurality of items corresponding to a plurality of blocks included in the prompt and possible values for the respective items, a plurality of sample prompts corresponding to a plurality of types of the combination; and
determining, as an adjustment item for adjusting the prompt, an item included in the combination used to generate a sample prompt that yields a result with a highest inference accuracy among results obtained by inputting the plurality of sample prompts into a language model.

18. An information processing device comprising a controller configured to execute a process comprising:
generating, based on configuration information in which a configuration of a prompt is represented by a combination of a plurality of items corresponding to a plurality of blocks included in the prompt and possible values for the respective items, a plurality of sample prompts corresponding to a plurality of types of the combination;
performing first data mining by using, as an input, information in which results obtained by inputting the plurality of sample prompts to a language model are associated with the combinations used to generate the sample prompts; and
searching for an adjustment item for adjusting the prompt by optimization based on a result of the first data mining.

19. The information processing device according to claim 18, wherein the controller executes processing of skipping the first data mining for configuration information in which the combination included in the configuration information includes a combination that satisfies an exclusion condition.

20. The information processing device according to claim 19, wherein the controller executes processing of skipping the first data mining for the combination that satisfies the exclusion condition in a case where a second sample prompt is generated with the combination that satisfies the exclusion condition by using sample data, and accuracy of a result obtained by inputting the second sample prompt into the language model is equal to or lower than a threshold, before skipping the first data mining for configuration information in which the combination included in the configuration information includes a combination that satisfies the exclusion condition.

21. The information processing device according to any one of claims 18 to 20, wherein the controller executes processing of the computer executes processing of excluding, from a target of the optimization, a result of the first data mining in which a value indicating an influence of the result of the first data mining on inference performance exceeds a threshold.

22. The information processing device according to claim 18, wherein in the processing of searching for the adjustment item, the controller explicitly narrows down a search space of an acquisition function for the optimization by using the result of the first data mining, and selects the adjustment item from within a narrowed range.

23. The information processing device according to claim 17 or 18, wherein the item represents a position of the block in the prompt.

24. The information processing device according to claim 17 or 18, wherein the item represents an expression variation of the block in the prompt.

25. A prompt adjustment program that causes a computer to execute a process comprising:
performing second data mining by using, as inputs, first information in which a first result obtained by inputting a first sample prompt to a language model is associated with a first combination of respective possible values for a plurality of items used to generate the first sample prompt, and second information in which a second result obtained by inputting a second sample prompt to the language model is associated with a second combination of respective possible values for a plurality of items used to generate the second sample prompt.

26. The prompt adjustment program according to claim 25, wherein in the processing of performing the second data mining, training of a machine learning model is performed using the first combination and the second combination as input data and using comparison information indicating a comparison result between the first result and the second result as ground truth data.

27. The prompt adjustment program according to any one of claims 1 to 4, wherein
in the processing of generating the plurality of sample prompts, the plurality of sample prompts including a first sample prompt and a second sample prompt and corresponding to the plurality of types of combinations are generated based on the configuration information, and
the computer is caused to further execute a process comprising:
performing second data mining by using, as inputs, first information in which a first result obtained by inputting the first sample prompt to a language model is associated with a first combination of respective possible values for a plurality of items used to generate the first sample prompt, and second information in which a second result obtained by newly inputting the second sample prompt to the language model is associated with a second combination of respective possible values for a plurality of items used to generate the second sample prompt.

28. The prompt adjustment program according to claim 27, wherein in the processing of performing the second data mining, training of a machine learning model is performed using the first combination and the second combination as input data and using comparison information indicating a comparison result between the first result and the second result as ground truth data.

29. A prompt adjustment program that causes a computer to execute a process comprising:
obtaining prediction accuracy for a fourth combination candidate by inputting, to a machine learning model, a third combination of respective possible values for a plurality of items used to generate a third sample prompt, and the fourth combination candidate of respective possible values for a plurality of items for use in generating a fourth sample prompt.

30. The prompt adjustment program according to any one of claims 1 to 4, wherein
in the processing of generating the plurality of sample prompts, the plurality of sample prompts including a third sample prompt and corresponding to the plurality of types of combinations are generated based on the configuration information, and
the computer is caused to further execute a process comprising:
obtaining prediction accuracy for a fourth combination candidate by inputting, to a machine learning model, a third combination of respective possible values for the plurality of items used to generate the third sample prompt, and the fourth combination candidate of respective possible values for the plurality of items for use in generating a fourth sample prompt.

31. A prompt adjustment method in which a computer executes processing of:
performing second data mining by using, as inputs, first information in which a first result obtained by inputting a first sample prompt to a language model is associated with a first combination of respective possible values for a plurality of items used to generate the first sample prompt, and second information in which a second result obtained by inputting a second sample prompt to the language model is associated with a second combination of respective possible values for a plurality of items used to generate the second sample prompt.

32. The prompt adjustment method according to claim 31, wherein in the processing of performing the second data mining, training of a machine learning model is performed using the first combination and the second combination as input data and using comparison information indicating a comparison result between the first result and the second result as ground truth data.

33. The prompt adjustment method according to any one of claims 9 to 12, wherein
in the processing of generating the plurality of sample prompts, the plurality of sample prompts including a first sample prompt and a second sample prompt and corresponding to the plurality of types of combinations are generated based on the configuration information, and
the computer further executes processing of:
performing second data mining by using, as inputs, first information in which a first result obtained by inputting the first sample prompt to a language model is associated with a first combination of respective possible values for a plurality of items used to generate the first sample prompt, and second information in which a second result obtained by newly inputting the second sample prompt to the language model is associated with a second combination of respective possible values for a plurality of items used to generate the second sample prompt.

34. The prompt adjustment method according to claim 33, wherein in the processing of performing the second data mining, training of a machine learning model is performed using the first combination and the second combination as input data and using comparison information indicating a comparison result between the first result and the second result as ground truth data.

35. A prompt adjustment method in which a computer executes processing of:
obtaining prediction accuracy for a fourth combination candidate by inputting, to a machine learning model, a third combination of respective possible values for a plurality of items used to generate a third sample prompt, and the fourth combination candidate of respective possible values for a plurality of items for use in generating a fourth sample prompt.

36. The prompt adjustment method according to any one of claims 9 to 12, wherein
in the processing of generating the plurality of sample prompts, the plurality of sample prompts including a third sample prompt and corresponding to the plurality of types of combinations are generated based on the configuration information, and
the computer further executes processing of:
obtaining prediction accuracy for a fourth combination candidate by inputting, to a machine learning model, a third combination of respective possible values for the plurality of items used to generate the third sample prompt, and the fourth combination candidate of respective possible values for the plurality of items for use in generating a fourth sample prompt.

37. An information processing device comprising a controller configured to execute a process comprising:
performing second data mining by using, as inputs, first information in which a first result obtained by inputting a first sample prompt to a language model is associated with a first combination of respective possible values for a plurality of items used to generate the first sample prompt, and second information in which a second result obtained by inputting a second sample prompt to the language model is associated with a second combination of respective possible values for a plurality of items used to generate the second sample prompt.

38. The information processing device according to claim 37, wherein in the processing of performing the second data mining, the controller performs training of a machine learning model by using the first combination and the second combination as input data and using comparison information indicating a comparison result between the first result and the second result as ground truth data.

39. The information processing device according to any one of claims 17 to 20, wherein
in the processing of generating the plurality of sample prompts, the controller generates, based on the configuration information, the plurality of sample prompts including a first sample prompt and a second sample prompt and corresponding to the plurality of types of combinations, and
the controller executes processing of:
performing second data mining by using, as inputs, first information in which a first result obtained by inputting the first sample prompt to a language model is associated with a first combination of respective possible values for a plurality of items used to generate the first sample prompt, and second information in which a second result obtained by newly inputting the second sample prompt to the language model is associated with a second combination of respective possible values for a plurality of items used to generate the second sample prompt.

40. The information processing device according to claim 39, wherein in the processing of performing the second data mining, the controller performs training of a machine learning model by using the first combination and the second combination as input data and using comparison information indicating a comparison result between the first result and the second result as ground truth data.

41. An information processing device comprising a controller configured to execute a process comprising:
obtaining prediction accuracy for a fourth combination candidate by inputting, to a machine learning model, a third combination of respective possible values for a plurality of items used to generate a third sample prompt, and the fourth combination candidate of respective possible values for a plurality of items for use in generating a fourth sample prompt.

42. The information processing device according to any one of claims 17 to 20, wherein
in the processing of generating the plurality of sample prompts, the controller generates, based on the configuration information, the plurality of sample prompts including a third sample prompt and corresponding to the plurality of types of combinations, and
the controller executes processing of:
obtaining prediction accuracy for a fourth combination candidate by inputting, to a machine learning model, a third combination of respective possible values for the plurality of items used to generate the third sample prompt, and the fourth combination candidate of respective possible values for the plurality of items for use in generating a fourth sample prompt.
